(19)

Europäisches
Patentamt
European
Patent Office
Office européen
des brevets

(11) **EP 1 531 586 B1**

(12) **EUROPEAN PATENT SPECIFICATION**

(45) Date of publication and mention
of the grant of the patent:
**19.03.2014 Bulletin 2014/12**

(51) Int Cl.:
*H04W 24/02* (2009.01)          *H04W 24/04* (2009.01)
*H04W 92/12* (2009.01)          *H04L 12/24* (2006.01)

(21) Application number: **04027130.6**

(22) Date of filing: **15.11.2004**

(54) **Method of managing resources for high-speed packet data service (HSDPA) in a mobile
communication system**

Verfahren zur Ressourcen-Verwaltung des Hochgeschwindigkeits-Paketdatendienstes (HSDPA) in
einem mobilen Kommunikationssystem

Procédé de gestion de ressources du service de données par paquets à haut débit (HSDPA) dans un
système de communication mobile

(84) Designated Contracting States:
**DE FR GB IT**

(30) Priority: **13.11.2003 KR 2003080355**

(43) Date of publication of application:
**18.05.2005 Bulletin 2005/20**

(73) Proprietor: **Samsung Electronics Co., Ltd.
Suwon-si, Gyeonggi-do, 443-742 (KR)**

(72) Inventors:
 • **Kim, Eun-Jung**
 **Yeongtong-gu**
 **Suwon-si**
 **Gyeonggi-do (KR)**
 • **Choi, Sung-Ho**
 **Yeongtong-gu**
 **Suwon-si**
 **Gyeonggi-do (KR)**
 • **Nahm, Seung-Hyeon**
 **Yeongtong-gu**
 **Suwon-si**
 **Gyeonggi-do (KR)**
 • **Han, Il**
 **Yeongtong-gu**
 **Suwon-si**
 **Gyeonggi-do (KR)**
 • **Moon, Joong-Soo**
 **Yeongtong-gu**
 **Suwon-si**
 **Gyeonggi-do (KR)**

(74) Representative: **Grünecker, Kinkeldey,
Stockmair & Schwanhäusser
Leopoldstrasse 4
80802 München (DE)**

(56) References cited:
**WO-A-01/63952      WO-A-02/17665
GB-A- 2 378 101      US-A1- 2003 153 323**

 • **"Universal Mobile Telecommunications System
(UMTS); UTRAN lub interface NBAP signalling
(3GPP TS 25.433 version 5.6.0 Release 5); ETSI
TS 125 433" ETSI STANDARDS, LIS, SOPHIA
ANTIPOLIS CEDEX, FRANCE, vol. 3-R3, no.
V5.6.0, 1 September 2003 (2003-09-01),
XP014016945 ISSN: 0000-0001**
 • **NORTEL NETWORKS: "Resource Status
Indication and Audit for HSDPA", 3GPP DRAFT;
R3-031675 (25_433 HSDPA RSI AND AUDIT), 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG3, no. San Diego,
USA; 20031112, 12 November 2003 (2003-11-12),
XP050155613, [retrieved on 2003-11-12]**
 • **NORTEL NETWORKS: "Email Discussion Report
on RSI and Audit for HSDPA", 3GPP DRAFT;
R3-031674 (EMAIL DISC ON HSDPA RSI AND
AUDIT), 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG3, no. San Diego, US; 20031117 - 20031121, 12
November 2003 (2003-11-12), XP050609005,
[retrieved on 2003-11-12]**

**Description**

**BACKGROUND OF THE INVENTION**

1. Field of the Invention

The present invention relates generally to a resource management method in a mobile communication system, and in particular, to a method of managing the status of resources allocated for high-speed packet data service.

2. Description of the Related Art

Mobile communication systems have evolved from basic voice service to high-speed, high-quality wireless data packet service for providing data services and multimedia services. High-speed wireless data packet service are being standardized for 3$^{rd}$ generation (3G) mobile communication systems, asynchronous UMTS (Universal Mobile Telecommunications System) of 3GPP (3$^{rd}$ Generation Project Partnership), and synchronous CDMA (Code Division Multiple Access) of 3GPP2 (3$^{rd}$ Generation Project Partnership 2). For example, the 3GPP and the 3GPP2 are standardizing HSDPA (High Speed Downlink Packet Access) and 1xEV-DV (Evolution-Data and Voice), respectively. The standardization work is major evidence of efforts to search for a solution to 2-Mbps or above high-speed, high-quality wireless data packet transmission service in the 3G mobile communication systems. 4$^{th}$ generation mobile communication systems intend to provide higher-speed, higher-quality multimedia service.

HSDPA is a data transmission scheme using an HS-DSCH (High Speed-Downlink Shared CHannel) and related control channels. The HS-DSCH is a downlink data channel that supports downlink high-speed packet data transmission in a UMTS mobile communication system.

HSDPA requires an advanced technology that increases adaptability to channel changes, aside from traditional technologies available in existing mobile communication systems. Therefore, AMCS (Adaptive Modulation and Coding Scheme), n-channel SAW (Stop And Wait) HARQ (Hybrid Automatic Retransmission reQuest), and FCS (Fast Cell Selection) have been introduced in HSDPA.

However, due to limited resources, system performance varies depending on how the limited resources are managed in mobile communication systems.

Regarding resource management in a conventional mobile communication system, a Node B is responsible for mapping between internal logical resources and hardware resources. The logical resources include local cells, cells, common transport channels, and common physical channels.

Upon initialization for HSDPA, the Node B checks its internal hardware status and notifies an RNC (Radio Network Controller) of the hardware status in the form of local cell information by a RESOURCE STATUS INDICATION message. The RESOURCE STATUS INDICATION message is a No Failure message. The RNC establishes logical resources, that is, cells and common channels for the Node B by a Cell Setup procedure and a common channel setup procedure based on the reported information.

The established initial resource status may be changed when a configuration within the Node B is changed or some failure is sensed from hardware in the Node B. Upon a change in the resource status, the Node B reports the resource status change to the RNC by a RESOURCE STATUS INDICATION (Service Impacting) message. The change is about the statuses of local cells, cells, and common channels. The RNC deletes unavailable cells or common channels based on the report, and reallocates cells or common channels in order to switch the Node B to the reallocated cells or common channels.

A Node B, which supports the new scheme proposed in the future-generation mobile communication systems, HSDPA, also needs to check its hardware resource status for HSDPA and report the hardware resource status in the form of logical resource information. However, such a procedure is yet to be specified (see technical document R3-031675 from 3GPP).

**SUMMARY OF THE INVENTION**

An object of the present invention is to substantially solve at least the above problems and/or disadvantages and to provide at least the advantages below. Accordingly, an object of the present invention is to provide a method of managing the status of allocated resources in an HSDPA mobile communication system.

Another object of the present invention is to provide a method of checking the configuration/status of available resources, upon initialization of hardware configured to support HSDPA and reporting the configuration/status information to an RNC in a Node B.

A further object of the present invention is to provide a method of checking the configuration/status of resources and reporting the resource configuration/status to an RNC, when a change or a failure occurs in hardware configured to support HSDPA.

Still another object of the present invention is to provide a method of reestablishing logical resources for HSDPA in a cell based on resource configuration/status information received from a Node B in an RNC.

Yet another object of the present invention is to provide a method of enabling an ongoing HSDPA service to be continued for a UE through a cell, when logical resources are reestablished for HSDPA.

Yet a further object of the present invention is to provide a method of ordering a Node B to report its HSDPA logical resource status to an RNC, when the logical resource configuration/status of the Node B is not identical to that of the RNC.

The above and other objects are achieved by providing a method of managing resources for HSDPA in a mobile communication system.

According to one aspect of the present invention, in a method of reporting the status of resources used for a high speed packet data service to an RNC in a mobile communication system in which the RNC allocates resources for the high speed packet data service and a Node B includes at least one local cell providing the high speed packet data service using the allocated resources among a plurality of local cells, the Node B determines on a local cell basis if the local, cells support the high speed packet data service, and transmits to the RNC per-local cell-based availability information indicating the availability of the high speed packet data service according to the determination.

According to another aspect of the present invention, in a method of allocating resources for a high speed packet data service in a mobile communication system having the RNC and a Node B includes at least one local cell providing the high packet data service using the allocated resources among a plurality of local cells, the RNC receives from the Node B per-local cell-based availability information indicating availability of the high speed packet data service in the local cells, determines the maximum number of cells that support the high speed packet data service based on the per-local cell-based availability information, and allocates resources for the high speed packet data service based on the maximum cell number.

According to a further aspect of the present invention, in a method of reporting the status of resources used for a high speed packet data service to an RNC in a mobile communication system in which the RNC allocates resources for the high speed packet data service and a Node B provides the high speed packet data service using the allocated resources on a cell basis, the Node B detects cells that can support the high speed packet data service, counts the maximum number of cells that can support the high speed packet data service, and transmits to the RNC information indicating the maximum cell number.

According to still another aspect of the present invention, in a method of allocating resources for a high speed packet data service in a mobile communication system in which an RNC allocates resources for the high speed packet data service and a Node B provides the high packet data service using the allocated resources on a cell basis, the RNC receives from the Node B information indicating the maximum number of cells supporting the high speed packet data service, and allocates resources for the high speed packet data service based on the maximum cell number.

## BRIEF DESCRIPTION OF THE DRAWINGS

The above and other objects, features, and advantages of the present invention will become more apparent from the following detailed description when taken in conjunction with the accompanying drawings in which:

FIG. 1 is a diagram illustrating a signaling procedure between a Node B and a CRNC upon initialization of HSDPA hardware or addition/removal of an HSDPA hardware device according to the present invention;

FIG. 2 is a diagram illustrating a signaling procedure for a change in HSDPA hardware according to an embodiment of the present invention;

FIG. 3 illustrates a Node B to which the concept of HSDPA cell is applied according to the present invention;

FIG. 4 illustrates a cell structure according to a third embodiment of the present invention;

FIG. 5 is a flowchart illustrating a control operation in a Node B for reporting an HSDPA hardware change to an RNC, when a change occurs in the HSDPA hardware, according to an embodiment of the present invention;

FIG. 6 is a flowchart illustrating a control operation in the Node B for allocating HSDPA resources as requested by the RNC according to the embodiment of the present invention;

FIG. 7 is a flowchart illustrating a control operation after receiving a RESOURCE STATUS INDICATION (No Failure) message from the Node B in the RNC according to the embodiment of the present invention;

FIG. 8 is a flowchart illustrating a control operation after receiving a RESOURCE STATUS INDICATION (Service Impacting) message from the Node B in the RNC according to the embodiment of the present invention;

FIG. 9 is a flowchart illustrating a control operation in the Node B for reporting the HSDPA hardware change to the RNC, when a change occurs in HSDPA hardware, according to another embodiment of the present invention;

FIG. 10 is a flowchart illustrating a control operation in the Node B for allocating HSDPA resources as requested by the RNC according to the second embodiment of the present invention;

FIG. 11 is a flowchart illustrating a control operation after receiving a RESOURCE STATUS INDICATION (No Failure) message from the Node B in the RNC according to the second embodiment of the present invention;

FIG. 12 is a flowchart illustrating a control operation after receiving a RESOURCE STATUS INDICATION (Service Impacting) message from the Node B in the RNC according to the second embodiment of the present invention;

FIG. 13 is a flowchart illustrating an HSDPA resource allocation procedure according to the first and second embodiments of the present invention;

FIG. 14 is a flowchart illustrating an HSDPA resource deletion procedure according to the first and second embodiments of the present invention;

FIG. 15 is a flowchart illustrating the HSDPA resource switching procedure according to the first and second embodiments of the present invention;

FIG. 16 is a flowchart illustrating an HSDPA resource allocation procedure according to the third embodiment of the present invention; and

FIG. 17 is a flowchart illustrating the HSDPA resource switching procedure according to the third embodiment of the present invention.

## DETAILED DESCRIPTION OF THE PREFERRED EMBODIMENTS

Preferred embodiments of the present invention will be described in detail herein below with reference to the accompanying drawings. In the following description, well-known functions or constructions are not described in detail because they would obscure the invention in unnecessary detail.

Additionally, for better understanding of the subject matter of the present invention, the present invention will be described in the context of a 3GPP mobile communication network being an asynchronous mobile communication standard. It is also to be appreciated that while embodiments of the present invention are applied to HSDPA, the present invention is applicable to other high-speed packet data service.

The present invention provides a method of managing resources used for HSDPA in a Node B. Therefore, a configuration for reporting information required for allocation of HSDPA resources to a CRNC (Controlling RNC) in a Node B, and a configuration for managing allocated HSDPA resources in an RNC are disclosed. The CRNC is an RNC for controlling logical resources to support HSDPA (hereinafter, referred to as HSDPA logical resources). The Node B reports the information required for allocation of HSDPA resources to the CRNC when (1) an HSDPA function is added to the Node B upon initialization of hardware configured to support HSDPA (hereinafter, referred to as HSDPA hardware); (2) the HSDPA function is changed due to a change in HSDPA configuration information or some failure in the HSDPA hardware in the Node B; (3) an HSDPA-related status is changed in a cell that provides the HSDPA function due to a change in the HSDPA configuration or some failure in the HSDPA hardware in the Node B; and (4) the HSDPA function of the Node B is partially or wholly lost due to removal of an HSDPA hardware device.

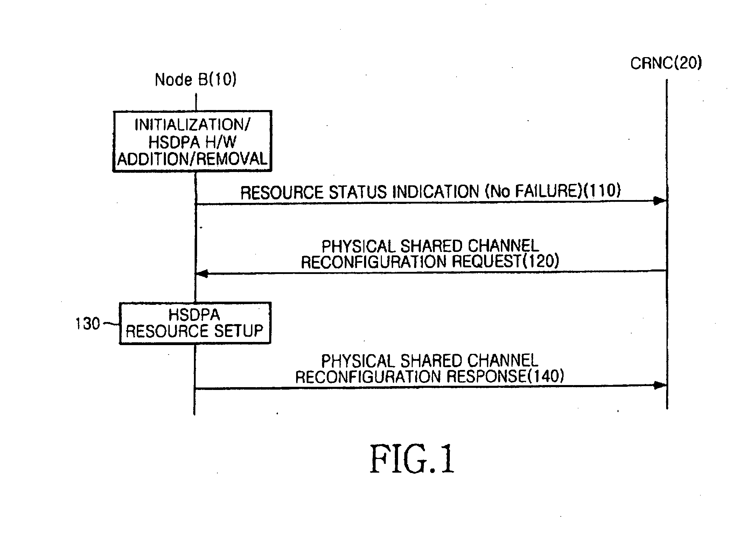

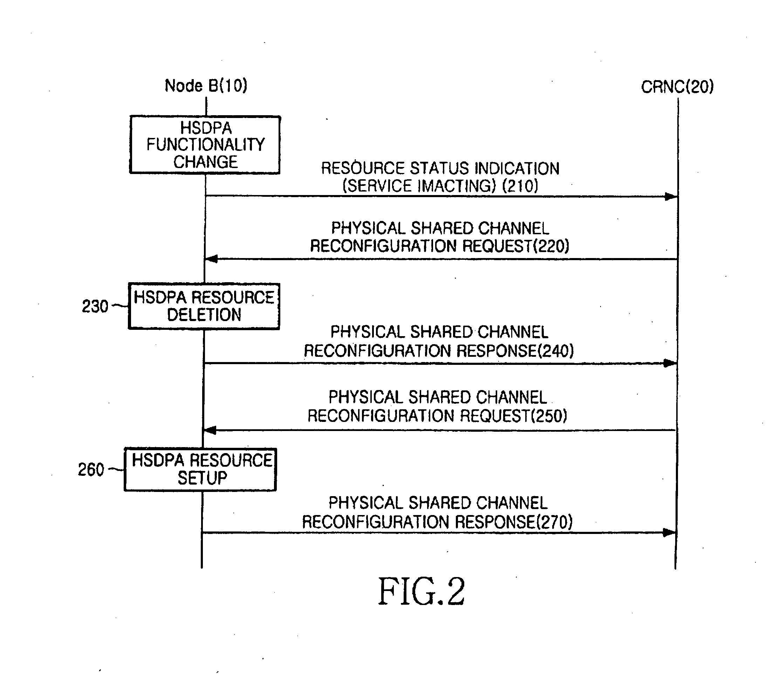

At the above-described situations, the Node B reports the current situation to the RNC controlling HSDPA logical resources. How the Node B reports to the RNC is disclosed in the different embodiments of the present invention. Each embodiment will be described with a distinction made between operations in the respective situations. A first embodiment of the present invention will be described below with reference to signaling procedures illustrated in FIGs. 1 and 2.

### 1. First Embodiment

The first embodiment utilizes a maximum number of cells (MAX_HSDPA_Cell_In_Node B) capable of supporting HSDPA (hereinafter, referred to as HSDPA cells) in a Node B. Upon initialization of HSDPA hardware, or when the ability to support HSDPA is changed due to a change in the HSDPA hardware, the Node B reports the maximum number of HSDPA cells to the RNC.

### 1.1. Signaling Procedure

### 1.1.1 Signaling when Adding/Removing HSDPA Cell

Upon initialization of HSDPA hardware, if the maximum number of HSDPA cells increases as the HSDPA function is added, the Node B reports the HSDPA cell increase to the RNC by a RESOURCE STATUS INDICATION (No Failure) message. If the HSDPA function is partially or wholly lost due to removal of an HSDPA hardware device , which also decreases the maximum number of HSDPA cells, the Node B reports the HSDPA cell decrease to the RNC by the RESOURCE STATUS INDICATION (No Failure) message.

FIG. 1 is a diagram illustrating a signaling procedure between a Node B and a CRNC upon initialization of HSDPA hardware or addition/removal of an HSDPA hardware device according to an embodiment of the present invention. Referring to FIG. 1, a Node B 10, upon its initialization for HSDPA, notifies a CRNC 20 of the maximum number of HSDPA cells (Max_HSDPA_Cell_In_Node B) by a RESOURCE STATUS INDICATION (No Failure) message in step 110. Additionally, when an HSDPA cell is added/removed due to addition/removal of an HSDPA hardware device, the Node B notifies the CRNC 20 Max_HSDPA_Cell_In_Node B by the RESOURCE STATUS INDICATION (No Failure) message in step 110.

The CRNC 20 determines if an HSDPA service is to be provided through a cell, Cell x based on Max_HSDPA_Cell_In_Node B. If the HSDPA service is to be provided through Cell x, the CRNC 20 allocates HSDPA resources to the Node B by a PHYSICAL SHARED CHANNEL RECONFIGURATION REQUEST message in step 120. The CRNC 20 can allocate HSDPA resources to as many HSDPA cells as indicated in the Max_HSDPA_Cell_In_Node B. That is, the number of cells that can provide the HSDPA service in the Node B 10 cannot exceed Max_HSDPA_Cell_In_Node B.

Upon receiving the PHYSICAL SHARED CHANNEL RECONFIGURATION REQUEST message, the Node B 10 maps an internal HSDPA hardware device to Cell x in step 130, establishes the allocated HSDPA resources. If the HSDPA resources are established successfully, the Node B transmits a PHYSICAL SHARED CHANNEL RECONFIGURATION RESPONSE message to the CRNC 20.

The CRNC 20 has HSDPA information as illustrated in Table 1 below.

(Table 1)

| Item | Number of cells |
|---|---|
| Maximum number of HSDPA cells | MAX_HSDPA_Cell_In_NodeB |
| Current number of HSDPA cells | MAX_HSDPA_Cell_In_NodeB |
| Current number of cells to which HSDPA logical resources have been allocated | HSDPA_Cell_In_NodeB |

As noted from Table 1, the maximum number of HSDPA cells is equal to the current number of HSDPA cells, Max_HSDPA_Cell_In_Node B, at an initialization for HSDPA.

For the CRNC 20 to manage the HSDPA information as illustrated in Table 1, the Node B 10 must transmit necessary information to the CRNC 20 at its initialization for HSDPA. Table 2 below illustrates the structure of the RESOURCE STATUS INFICATION message by which the information is delivered to the CRNC 20.

(Table 2)

| IE/Group Name | Presence | Range |
|---|---|---|
| Message Discriminator | M | |
| Message Type | M | |
| Transaction ID | M | |
| CHOICE Indication Type | M | |
| >No Failure | | |
| »Local Cell Information | | 1..<max LocalCellinNodeB> |
| ... (omitted) | | |
| »Local Cell Group Information | | 0..<maxLocalCellinNodeB> |
| ... (omitted) | | |
| >>Power Local Cell Group Information | | 0..<maxLocalCellinNodeB> |
| ... (omitted) | | |
| >> Max Number of HSDPA Cells | | |

Table 2 shows that an information element (IE), Max Number of HSDPA Cells, is further included in the conventional RESOURCE STATUS INDICATION (No Failure) message so that the Node B can notify the RNC of the Max_HSDPA_Cell_In_Node B. The "Max Number of HSDPA Cells" IE indicates the maximum number of HSDPA cells available in the Node B.

1.1.2 Signaling Procedure in a Configuration/Status Change

When the ability of providing HSDPA service is changed in an HSDPA cell, the Node B 10 reports the change to the CRNC 20 by a RESOURCE STATUS INDICATION (Service Impacting) message.

FIG. 2 is a diagram illustrating a signaling procedure in a change in HSDPA hardware according to the embodiment of the present invention. Referring to FIG. 2, the Node B 10, which has reported the HSDPA configuration/status information to the CRNC 20 at the initialization for HSDPA, monitors Cell x allocated to HSDPA logical resources in order to determine if Cell x cannot support HSDPA temporarily. Upon sensing such a situation, the Node B 10 notifies the CRNC 20 that "the HSDPA service is impossible in Cell x" or "HSDPA functionality degradation is sensed from Cell x" by a RESOURCE STATUS INDICATION (Service Impacting) message in step 210.

The CRNC 20 is assumed to have the HSDPA information as illustrated in Table 1 by the afore-described procedure. Upon receiving the RESOURCE STATUS INDICATION (Service Impacting) message, the CRNC 20 updates the existing HSDPA information with the information included in the received message.

Table 3 illustrates an example of updating of the HSDPA information of Table 1.

(Table 3)

| Item | Number of cells |
|---|---|
| Maximum number of HSDPA cells | MAX_HSDPA_Cell_In_NodeB |
| Current number of HSDPA cells | MAX_HSDPA_Cell_In_NodeB-1 |
| Current number of cells to which HSDPA logical resources have been allocated | HSDPA_Cell_In_NodeB |

Referring to Table 3, the current number of HSDPA cells is less than Max_HSDPA_Cell_In_Node B by the number of cells that cannot support HSDPA temporarily. Therefore, the current number of HSDPA cells is Max_HSDPA_Cell_In_Node B-1.

The CRNC 20 compares the current number of HSDPA cells with the number of cells having HSDPA logical resources. If the current number of HSDPA cells is greater than the number of cells having HSDPA logical resources, the CRNC 20 reallocates HSDPA resources to Cell x by a Physical Shared Channel Reconfiguration procedure.

This relation can be expressed as: "If (current number of HSDPA cells)-(current number of cells having HSDPA logical resources) ≥1, HSDPA resources are allocated to Cell x which cannot support HSDPA reportedly".

The Physical Shared Channel Reconfiguration procedure is performed in step 220 through step 270 in FIG. 2. That is, the CRNC 20 reallocates logical resources to Cell x, if the aforementioned condition is satisfied by a PHYSICAL CHANNEL RECONFIGURATION REQUEST message in step 220. The Node B 10 then establishes the HSDPA resources for Cell x in step 260 and transmits a PHYSICAL CHANNEL RECONFIGURATION RESPONSE message to the CRNC 20 in step 270. To establish the HSDPA resources for Cell x, a procedure for releasing existing HSDPA resources precedes in steps 230, 240, and 250. That is, the Node B 10 deletes the existing HSDPA resources for Cell x in step 230 and reports the HSDPA resource deletion to the CRNC 20 by a PHYSICAL CHANNEL RECONFIGURATION RESPONSE message in step 240. The CRNC 20 requests establishment of the new HSDPA resources for Cell x to the Node B 10 by the PHYSICAL CHANNEL RECONFIGURATION REQUEST message in step 250.

The resulting resetting of an HSDPA radio link for a UE receiving the HSDPA service via Cell x enables the ongoing HSDPA service to continue without interruptions. The CRNC 20 then notifies the UE of a change such as changed HS-PDSCH (High Speed-Physical Downlink Shared CHannel) or HS-SCCH (High Speed-Shared Control CHannel) code information (MAC-hs reset needed) by an RRC (Radio Resource Control) message, if the change occurs.

However, the current number of PDA cells may be less than the current number of cells having HSDPA logical resources. In this case, the CRNC 20 deletes the existing HSDPA resources for Cell x by the Physical Shared Channel Reconfiguration procedure, determining that the HSDPA service cannot be provided through Cell x in steps 220, 230, and 240. At the same time, HSDPA radio links are deleted from UEs that are receiving the HSDPA service through Cell x.

Table 4 shows the format of the RESOURCE STATUS INDICATION (Service Impacting) message that the Node B 10 transmits to the CRNC 20 in step 210 when the Node B 10 senses a change in its HSDPA ability during the HSDPA service.

(Table 4)

| IE/Group Name | Presence | Range |
|---|---|---|
| Message Discriminator | M | |
| Message Type | M | |

(continued)

| IE/Group Name | Presence | Range |
|---|---|---|
| Transaction ID | M | |
| CHOICE Indication Type | M | |
| >Service Impacting | | |
| >>Local Cell Information | | 0..<maxLocalcellinNode B> |
| ... (omitted) | | |
| >>Local Cell Group Information | | 0..<maxLocalCellinNode B> |
| ... (omitted) | | |
| >>Power Local Cell Group Information | | 0..<maxLocalCellinNode B> |
| ... (omitted) | | |
| >>Communication Control Port Information | | 0..<maxCCPinNodeB> |
| ... (omitted) | | |
| >>Cell Information | | 0..<maxCellinNodeB> |
| >>>C-ID | M | |
| >>>Resource Operational State | O | |
| >>>Availability Status | O | |
| **>>>HSDPA Information** | | 0..1 |
| **>>>>Resource Operational State** | M | |
| **>>>>Availability Status** | M | |
| >>>HS-PDSCH Status Information | | 0..1 |
| >>>>Resource Operational State | M | |
| >>>>Availability Status | M | |
| >>>HS-SCCH Status Information | | 0..1 |
| >>>>Resource Operational State | M | |
| >>>>Availability Status | M | |

In Table 4, HSDPA Information indicates if the HSDPA service can be provided in a corresponding cell through Resource Operational State. If Resource Operational State is Enable, the cell can provide the HSDPA service and if it is Disable, the cell cannot provide the HSDPA service. Availability Status indicates more detailed information of the HSDPA resource status. More specifically, the Availability Status is set to one of the values indicating empty, in test, failed, power-off, off-line, off-duty, dependency, degraded, no installed, and log full. These values are based on the parameters of Availability Status in section 9.2.1.2 of 3GPP Spec. 25.433. The statuses of HSDPA physical channels, HS-PDSCH and HS-SCCH, can also be reported in the format illustrated in Table 4.

1.1.3 Signaling Procedure for Different Configuration Information between Node B and RNC

If the RNC or the Node B determines that configuration/status information differs in them, an audit operation is performed. When determining that the configuration/status information of the RNC is different from that of the Node B, the Node B notifies the RNC that an audit is required by an AUDIT REQUIRED INDICATION message. The RNC then orders the Node B to conduct the audit by an AUDIT REQUEST message. In accordance with the embodiment of the present invention, upon receiving the AUDIT REQUEST message, the Node B transmits the following HSDPA information by an AUDIT RESPONSE message.

1) Max Number of HSDPA Cells
2) Cell Information

7

> HSDPA Information

>> Resource Operational State
>> Availability Status

> HS-PDSCH Status Information

>> Resource Operational State
>> Availability Status

> HS-SCCH Status Information

>> Resource Operational State
>> Availability Status

Information included for reporting the HSDPA status in the AUDIT RESPONSE message is the same as the HSDPA status information shown in Tables 2 and 4.

However, if the RNC determines that it has different configuration/status information from that of the Node B, it can order the Node B to conduct an audit by transmitting the AUDIT REQUEST message to the Node B, without the need for receiving the AUDIT REQUIRED INDICATION message.

1.2. Operations

The operations of the Node B and the RNC in accordance with the embodiment of the present invention will be described herein below in more detail.

1.2.1 Operation of Node B

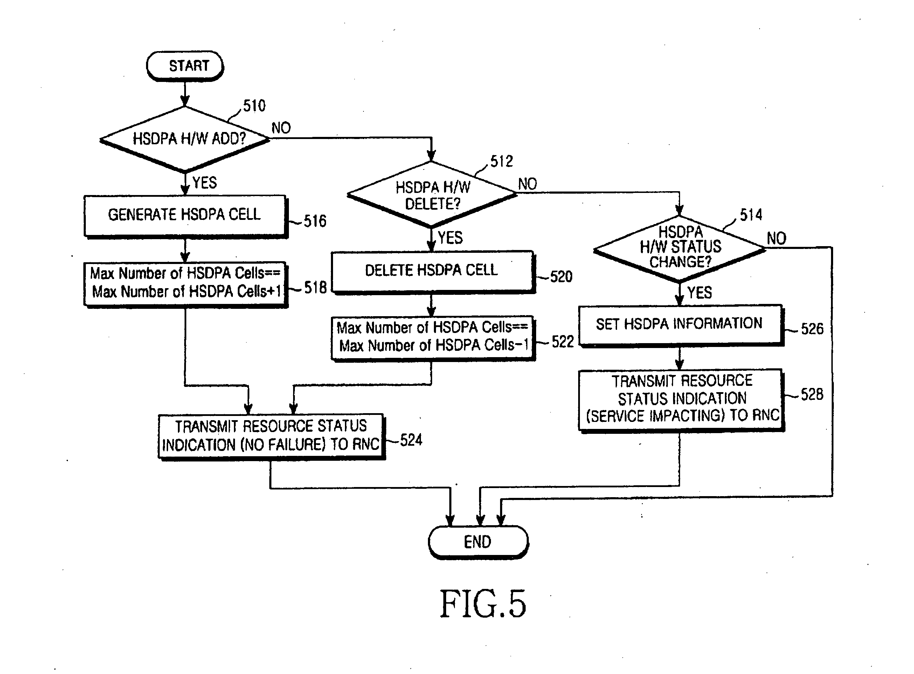

FIG. 5 is a flowchart illustrating a control operation in a Node B for reporting an HSDPA hardware change to the RNC, when a change occurs in the HSDPA hardware, according to an embodiment of the present invention. Referring to FIG. 5, the Node B monitors the status of HSDPA hardware in steps 510, 512, and 514. If the HSDPA hardware status is changed, the Node B reports the change to the RNC.

In step 510, the Node B determines if an HSDPA hardware device has been added. If a device has been added, the Node B generates an HSDPA cell to which the added HSDPA hardware device is mapped in step 516 and increments a parameter, Max Number of HSDPA Cells by 1 in step 518. Max Number of HSDPA Cells is defined as the current number of cells available for HSDPA. The Node B notifies the RNC of the changed count of Max Number of HSDPA Cells by a RESOURCE STATUS INDICATION (No failure) message in step 524.

The Node B determines if an HSDPA hardware device has been deleted in step 512. If the HSDPA hardware device has been deleted, the Node B deletes an HSDPA cell to which the HSDPA hardware device is mapped in step 520 and decrements Max Number of HSDPA Cells by 1 in step 522. The Node B notifies the RNC of the changed count of Max Number of HSDPA Cells by the RESOURCE STATUS INDICATION (No failure) message in step 524.

The Node B determines if the status of an HSDPA hardware device has been changed in step 514. If the HSDPA hardware device has been changed, the Node B sets HSDPA Information to a value indicating the changed HSDPA hardware status in step 526 and transmits a RESOURCE STATUS INDICATION (Service Impacting) message containing the value of HSDPA Information to the RNC in step 528.

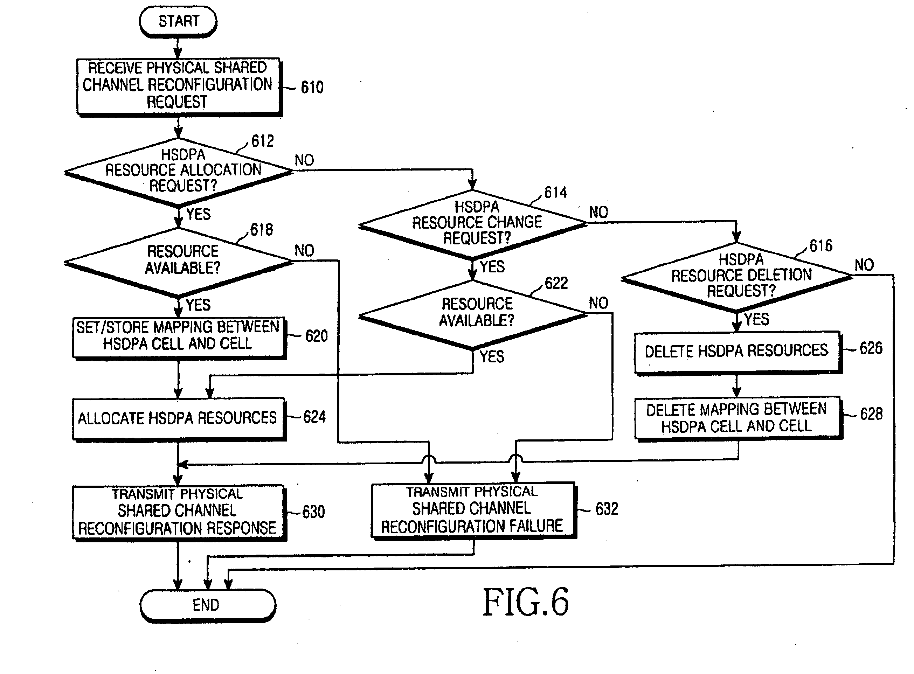

FIG. 6 is a flowchart illustrating a control operation in the Node B for allocating HSDPA resources as requested by the RNC according to an embodiment of the present invention. Referring to FIG. 6, the Node B receives a PHYSICAL SHARED CHANNEL RECONFIGURATION REQUEST message from the RNC in step 610 and determines if the received message indicates the first request of HSDPA resources allocation to Cell x from the RNC in step 612. If the received message indicates the first request of HSDPA resources allocation to Cell x from the RNC, the Node B determines if there is an HSDPA cell (HSDPA Cell y) that can provide the requested HSDPA resources and has been spared from allocation to other cells in step 618. If HSDPA Cell y exists, the Node B proceeds to step 620, but if HSDPA Cell y does not exist, the Node B jumps to step 632.

In step 620, the Node B maps the HSDPA service of Cell x to HSDPA Cell y and stores the mapping relationship. The Node B allocates the HSDPA resources requested by the RNC in step 624 and notifies the RNC of a successful setup of the requested HSDPA resources by a PHYSICAL SHARED CHANNEL RECONFIGURATION RESPONSE message in step 630. That is, the Node B notifies the RNC by the PHYSICAL SHARED CHANNEL RECONFIGURATION RESPONSE message that the HSDPA service can be provided through Cell x as the requested HSDPA resources are established in the Node B. However, in step 632, the Node B transmits, to the RNC, a PHYSICAL SHARED CHANNEL RECONFIGURATION FAILURE message indicating a failed setup of the requested HSDPA resources.

After receiving the PHYSICAL SHARED CHANNEL RECONFIGURATION REQUESTE message, the Node B determines if the RNC requests the change of HSDPA resources allocated to Cell x in step 614. If the RNC requests the change of HSDPA resources allocated to Cell x, the Node B proceeds to step 622.

In step 622, the Node B determines if the HSDPA Cell y mapped to Cell x can provide the requested HSDPA resources. If the requested HSDPA resources can be provided, this implies that the HSDPA resources of Cell x can be changed. In this case, the Node B allocates the requested HSDPA resources in step 624 and transmits to the RNC the PHYSICAL SHARED CHANNEL RECONFIGURATION RESPONSE message indicating the successful change of the HSDPA resources as requested by the RNC in step 630. However, if the HSDPA resources cannot be changed in step 622, the Node B transmits to the RNC the PHYSICAL SHARED CHANNEL RECONFIGURATION FAILURE message indicating the failure of changing the HSDPA resources as requested by the RNC in step 632.

After receiving the PHYSICAL SHARED CHANNEL RECONFIGURATION REQUESTE message, the Node B determines if the RNC requests deletion of HSDPA resources allocated to Cell x in step 616. If the RNC requests deletion of HSDPA resources allocated to Cell x, the Node B proceeds to step 626.

The Node B deletes the HSDPA resources of Cell x in step 626 and deletes the mapping between Cell x and HSDPA Cell y in step 628. Therefore, HSDPA Cell y can be mapped to any other cell later. In step 630, the Node B transmits to the RNC a PHYSICAL SHARED CHANNEL RECONFIGURATION RESPONSE message indicating the successful deletion of the HSDPA resources. That is, the Node B notifies the RNC, using the PHYSICAL SHARED CHANNEL RECONFIGURATION RESPONSE message, that the requested HSDPA resources have been deleted from the Node B to be available later for the HSDPA service through Cell x

### 1.2.2 Operation of RNC

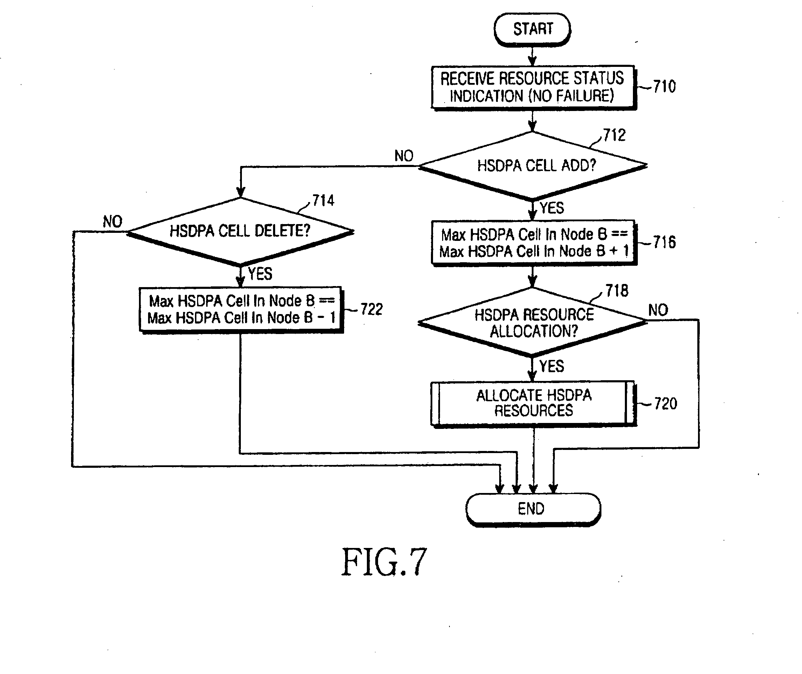

FIG. 7 is a flowchart illustrating a control operation after receiving the RESOURCE STATUS INDICATION (No Failure) message from the Node B in the RNC according to an embodiment of the present invention. Referring to FIG. 7, upon receiving the RESOURCE STATUS INDICATION (No Failure) message from the Node B in step 710, the RNC determines if an HSDPA cell has been added by comparing Max Number of HSDPA Cells set in the received message with an existing stored Max Number of HSDPA Cells in step 712.

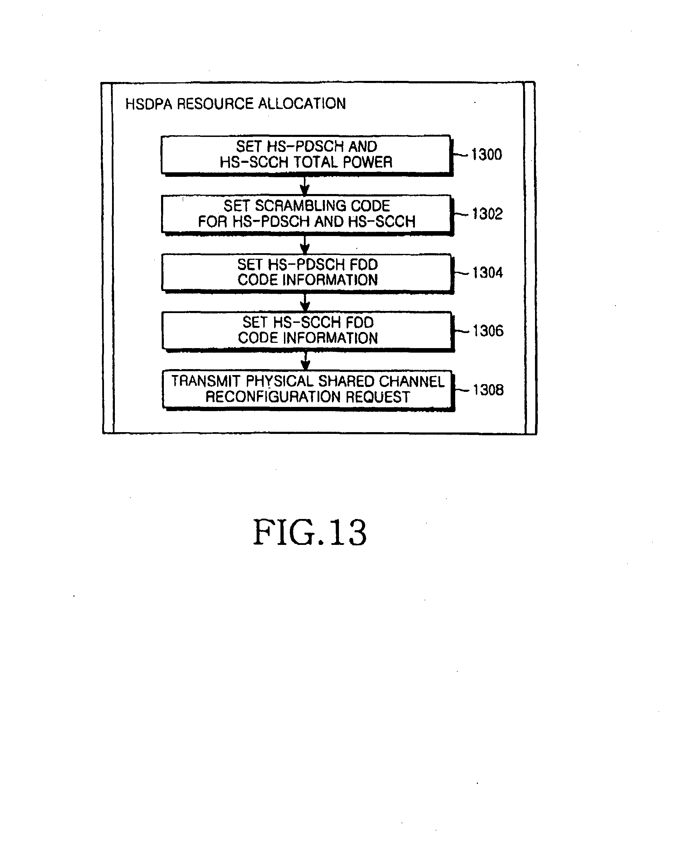

If an HSDPA cell has been added, the RNC updates the stored Max Number of HSDPA Cells to the new received Max Number of HSDPA Cells in step 716. That is, the RNC increments the stored Max Number of HSDPA Cells by 1 and stores the incremented Max Number of HSDPA Cells as an updated Max Number of HSDPA Cells. Accordingly, the RNC recognizes that the Node B can additionally provide the HSDPA service. In step 718, the RNC determines whether to allocate HSDPA resources to Cell x. If the RNC determines to allocate HSDPA resources to Cell x, the RNC performs an HSDPA resource allocation operation in step 720, which will be described in more detail below with reference to FIG. 13.

In the absence of an added HSDPA cell in step 712, the RNC determines if an existing HSDPA cell has been deleted by comparing Max Number of HSDPA Cells set in the received message with the stored Max Number of HSDPA Cells in step 714.

If an HSDPA cell has been deleted, the RNC updates the stored Max Number of HSDPA Cells to the new received Max Number of HSDPA Cells in step 722. That is, the RNC decrements the stored Max Number of HSDPA Cells by 1 and stores the decremented Max Number of HSDPA Cells as an updated Max Number of HSDPA Cells.

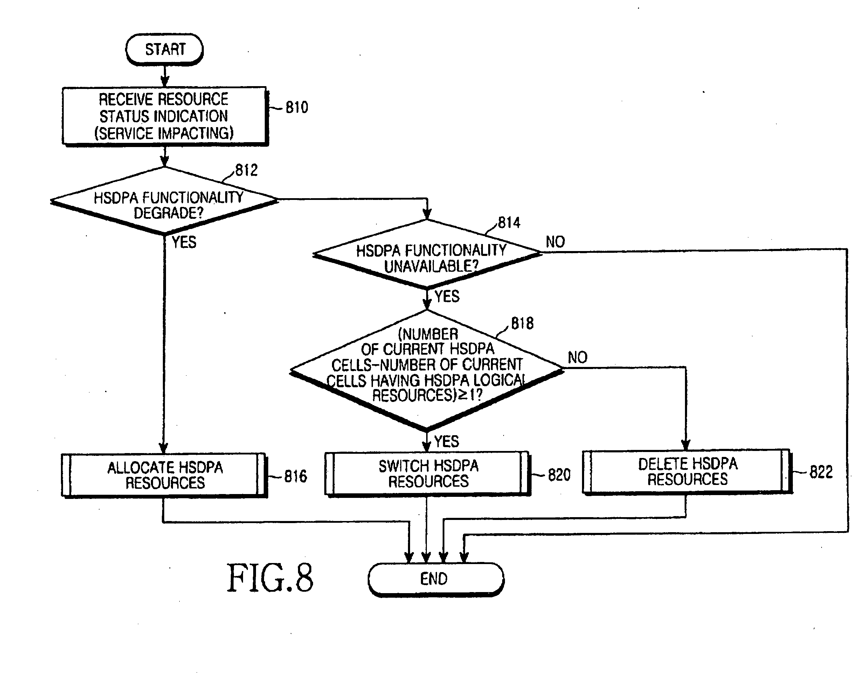

FIG. 8 is a flowchart illustrating a control operation after receiving the RESOURCE STATUS INDICATION (Service Impacting) message from the Node B in the RNC according to an embodiment of the present invention. Referring to FIG. 8, upon receiving the RESOURCE STATUS INDICATION (Service Impacting) message from the Node B in step 810, the RNC determines from HSDPA Information set in the received message if HSDPA functionality related to Cell x receiving the HSDPA service has been degraded in step 812. If the HSDPA functionality has been degraded, the RNC proceeds to step 816, but if the HSDPA functionality has not been degraded, the RNC proceeds to step 814. The RNC performs an HSDPA resource reallocation operation to compensate for the HSDPA functionality degradation in step 816. The HSDPA resource reallocation operation will be described in more detail below with reference to FIG. 13.

In step 814, the RNC determines from HSDPA Information set in the received message if HSDPA functionality related to Cell x receiving the HSDPA service is available. If the HSDPA functionality is unavailable, the RNC determines if there are available HSDPA resources in step 818, by using Equation (1).

$$\text{(Current number of HSDPA cells)-(current number of cells having HSDPA logical resources)} \geq 1$$

$$\dots \dots (1)$$

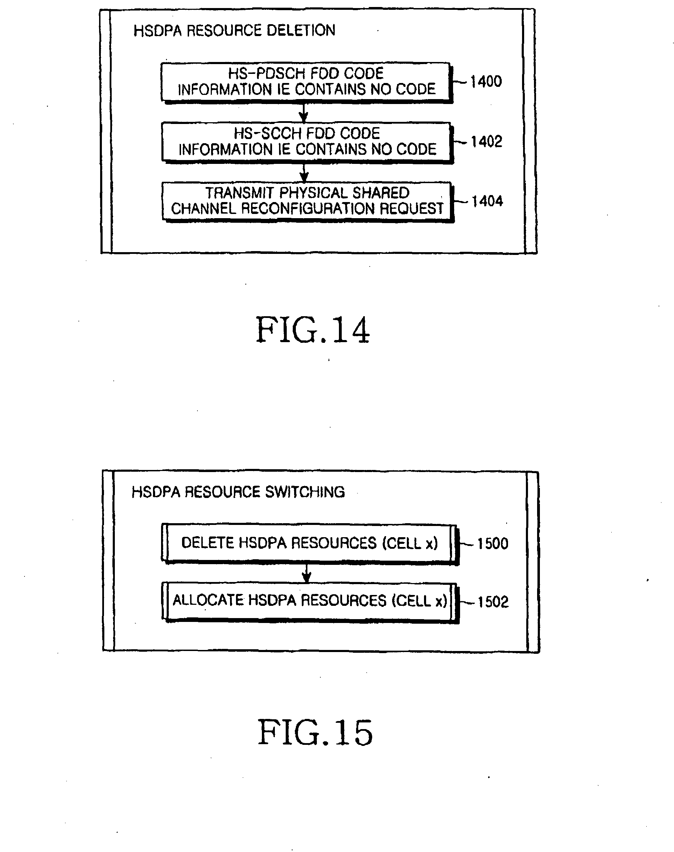

If Equation (1) is satisfied, which implies that HSDPA resources are available, the RNC performs an HSDPA resource deletion operation by releasing HSDPA resources allocated to Cell x and allocating the available HSDPA resources to Cell x in step 820. The HSDPA resource switching operation will be described in more detail below with reference to FIG. 15.

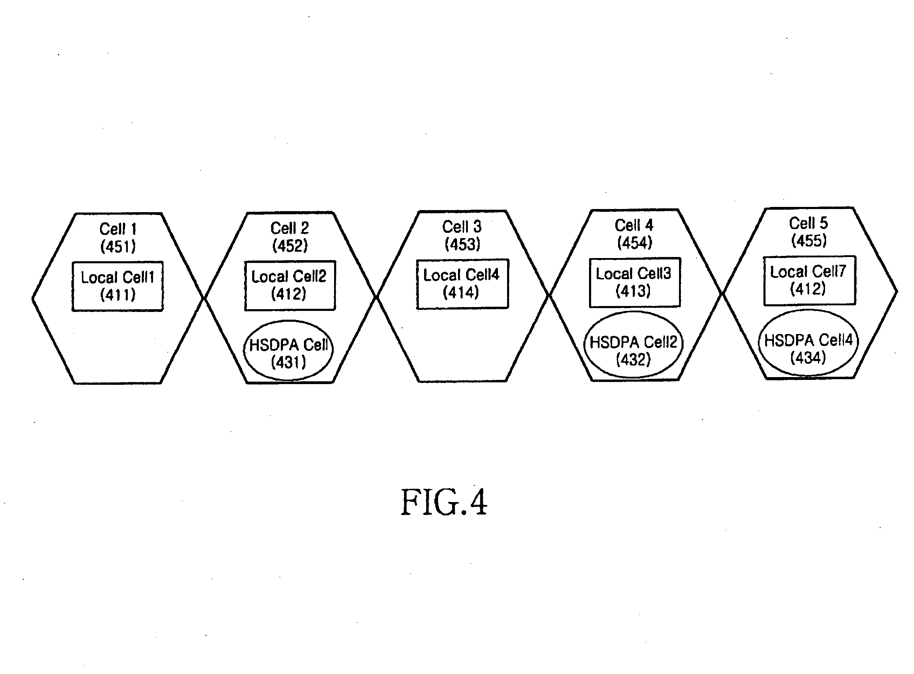

If Equation (1) is not satisfied, which indicates the absence of available HSDPA resources, the RNC deletes the HSDPA resources allocated to Cell x in step 822. The HSDPA resource deletion will be described in more detail below with reference to FIG 4.

Hereinbelow, the HSDPA resource allocation, switching, and deletion operations addressed in FIGs. 7 and 8 will be described in more detail.

FIG. 13 is a flowchart illustrating an HSDPA resource allocation procedure according to an embodiment of the present invention. Referring to FIG. 13, the RNC sets a maximum power level for the HS-PDSCH and the HS-SCCH for Cell x, to which the RNC determines to provide the HSDPA service, in step 1300 and determines a scrambling code for the HS-PDSCH and the HS-SCCH in step 1302. The RNC sets HS-PDSCH FDD code information based on a code allocated to the HS-PDSCH in step 1304 and sets HS-SCCH FDD code information based on a code allocated to the HS-SCCH in step 1306. In step 1308, the RNC generates a PHYSICAL SHARED CHANNEL RECONFIGURATION REQUEST message including the above-described HSDPA resource information and transmits it to the Node B.

FIG. 14 is a flowchart illustrating an HSDPA resource deletion procedure according to an embodiment of the present invention. Referring to FIG. 14, the RNC does not allocate any code in FDD code information of the HS-PDSCH, thereby deleting resources from the HS-PDSCH in step 1400 and does not allocate any code in FDD code information of the HS-SCCH, thereby deleting resources from the HS-SCCH in step 1402. As a result, HSDPA resources are deleted from the HS-PDSCH and the HS-SCCH. In step 1404, the RNC generates a PHYSICAL SHARED CHANNEL RECONFIGURATION REQUEST message including the HSDPA resource deletion information and transmits it to the Node B.

FIG. 15 is a flowchart illustrating an HSDPA resource switching procedure according to an embodiment of the present invention. Referring to FIG. 15, if HSDPA resources allocated to Cell x are invalid and thus the HSDPA service is unavailable to Cell x, the RNC deletes the HSDPA resources from Cell x in step 1500, as described with reference to FIG. 14. If HSDPA resources are available, the RNC reallocates the available HSDPA resources to Cell x in step 1502, as described with reference to FIG. 13.

2. Second Embodiment

2.1.1 Signaling at Initialization for HSDPA Service

When a local cell is added as HSDPA hardware is initialized, the Node B notifies the CRNC as to whether each local cell supports HSDPA functionality by a RESOURCE STATUS INDICATION (No Failure) message.

Referring to FIG. 1, upon sensing the initialization of the HSDPA hardware, the Node B transmits the RESOURCE STATUS INDICATION (No Failure) message to the CRNC to notify if the HSDPA functionality is supported in each local cell in step 110.

Table 5 below specifies the structure of the RESOURCE STATUS INDICATION message.

(Table 5)

| IE/Group Name | Presence | Range |
|---|---|---|
| Message Discriminator | M | |
| Message Type | M | |
| Transaction ID | M | |
| CHOICE Indication Type | M | |
| >No Failure | | |

(continued)

| IE/Group Name | Presence | Range |
|---|---|---|
| **>>Local Cell Information** | | 1..<max LocalCellinNodeB> |
| **>>>Local Cell ID** | M | |
| ... (omitted) | | |
| **>>>HSDPA Support Indicator** | M | |
| >>>HSDPA information | C-HSDPASupport | |
| >>>>MAC-hs Buffer Credit | M | |
| >>>>Maximum HS-PDSCH Code | M | |
| >>>>Maximum DL Power Capability | M | |
| ... (omitted) | | |

In Table 5, HSDPA Support Indicator indicates if a corresponding local cell supports HSDPA functionality. For example, if the local cell supports the HSDPA functionality, HSDPA Support Indicator is set to Support. If the local cell does not support the HSDPA functionality, HSDPA Support Indicator is set to Not Support. In the former case, the RESOURCE STATUS INDICATION message must include HSDPA Information.

The following parameters are included in HSDPA Information.

MAC-hs Buffer Credit: A parameter indicating the maximum capacity of the HSDPA functionality of the local cell. It is the size of a MAC_hs buffer.
Maximum HS-PDSCH Code: The number of HS-PDSCH codes that can be processed in the local cell.
Maximum DL Power Capability: The maximum power available for the HSDPA service in the local cell.

The RNC performs a setup procedure based on the local cell information received by the RESOURCE STATUS INDICATION message. In the setup procedure, the RNC sets up cells for the Node B and then allocates HSDPA resources to cells that will provide the HSDPA service. In step 120, the RNC transmits a PHYSICAL SHARED CHANNEL RECONFIGURATION REQUEST message containing HSDPA resource allocation information to the Node B. The cells that will provide the HSDPA service must be cells to which local cells supporting HSDPA are mapped. If HSDPA resources are allocated to a cell to which a non-HSDPA local cell is mapped by the PHYSICAL SHARED CHANNEL RECONFIGURATION REQUEST message, the Node B rejects the HSDPA resource allocation by transmitting a PHYSICAL SHARED CHANNEL RECONFIGURATION FAILURE message (not shown in FIG. 1).

While the procedure is performed for individual local cells in the above description, it can be further contemplated that the procedure can also be performed for local cell groups. In this case, the Node B notifies the RNC as to whether each local cell group supports HSDPA. Accordingly, the above-described HSDPA Information is included for each HSDPA-supporting local cell group. A RESOURCE STATUS INDICATION message used to indicate if local cell groups support HSDPA is configured as follows.

(Table 6)

| IE/Group Name | Presence | Range |
|---|---|---|
| Message Discriminator | M | |
| Message Type | M | |
| Transaction ID | M | |
| CHOICE Indication Type | M | |
| >No Failure | | |
| **>>Local Cell Group Information** | | 1..<max LocalCellGroupinNodeB> |
| **>>>Local Group Cell ID** | **M** | |
| ... (omitted) | | |

(continued)

| IE/Group Name | Presence | Range |
|---|---|---|
| **>>>HSDPA information** | | 0..1 |
| >>>>MAC-hs Buffer Credit | M | |
| >>>>Maximum HS-PDSCH code | M | |
| >>>>Maximum DL Power Capability | M | |
| ... (omitted) | | |

In Table 6, HSDPA Information includes the same parameters as described with reference to Table 5.

After setting up HSDPA resources allocated by the PHYSICAL SHARED CHANNEL RECONFIGURATION REQUEST message in step 130, the Node B transmits a PHYSICAL SHARED CHANNEL RECONFIGURATION RESPONSE message to the RNC in step 140.

2.1.2 Signaling in the Case of Change in HSDPA Service Capability

When the initially reported HSDPA capability of a local cell is changed or the HSDPA capability of a cell to which HSDPA were allocated, the Node B reports the HSDPA capability change to the RNC by a RESOURCE STATUS INDICATION (Service Impacting) message.

Table 7 below illustrates a structure of the RESOURCE STATUS INDICATION (Service Impacting) message.

(Table 7)

| IE/Group Name | Presence | Range |
|---|---|---|
| Message Discriminator | M | |
| Message Type | M | |
| Transaction ID | M | |
| CHOICE Indication Type | M | |
| >Service Impacting | | |
| **>>Local Cell Information** | | 0..<maxLocalCellinNodeB> |
| ... (omitted) | | |
| **>>>HSDPA Support Indicator** | **M** | |
| **>>>HSDPA information** | | C-HSDPASupport |
| >>>>MAC-hs Buffer Credit | M | |
| >>>>Maximum HS-PDSCH code | M | |
| >>>>Maximum DL Power Capability | M | |
| >>Local Cell Group Information | | 0..<maxLocalCellinNodeB> |
| ... (omitted) | | |
| **>>>HSDPA information** | | 0..1 |
| >>>>MAC-hs Buffer Credit | M | |
| >>>>Maximum HS-PDSCH code | M | |
| >>>>Maximum DL Power Capability | M | |
| >>Power Local Cell Group Information | | 0..<maxLocalCellinNodeB> |
| ... (omitted) | | |
| >>Communication Control Port Information | | 0..<maxCCPinNodeB> |

(continued)

| IE/Group Name | Presence | Range |
|---|---|---|
| ... (omitted) | | |
| >>Cell Information | | 0..<maxCellinNodeB> |
| >>>C-ID | M | |
| >>>Resource Operational State | O | |
| >>>Availability Status | O | |
| **>>>HSDPA Status Information** | | 0..1 |
| >>>>Resource Operational State | M | |
| >>>>Availability Status | M | |

In Table 7, HSDPA Information is the same as HSDPA Information of Table 4 and HSDPA Status Information is the same as that illustrated in Table 3.

If a change occurs in the HSDPA capability of Local Cell y while Cell x is providing the HSDPA service through Local Cell y, Cell x cannot provide the HSDPA service successfully any more. Therefore, the RNC deletes HSDPA resources from Cell x by a Physical Shared Channel Reconfiguration procedure. Also, the RNC deletes radio links from UEs that receive the HSDPA service from Local Cell y.

2.1.3 Signaling Procedure for Different Configuration Information between Node B and RNC

If the RNC or the Node B determines that configuration/status information differs in them, an audit operation is performed. When determining that the configuration/status information of the RNC is different from that of the Node B, the Node B tells the RNC that an audit is required by an AUDIT REQUIRED INDICATION message. The RNC then orders the Node B to conduct the audit by an AUDIT REQUEST message. In accordance with the second embodiment of the present invention, upon receiving the AUDIT REQUEST message, the Node B transmits the following HSDPA information by an AUDIT RESPONSE message.

1) Local Cell Information

> HSDPA Support Indicator
> HSDPA Information

>> MAC-hs Buffer Credit
>> Maximum HS-PDSCH Code
>> Maximum DL Power Capability

2) Cell Information

> HSDPA Information

>>Resource Operational State
>> Availability Status

> HS-PDSCH Status Information

>>Resource Operational State
>> Availability Status

> HS-SCCH Status Information

>> Resource Operational State
>> Availability Status

Information included for reporting the HSDPA status in the AUDIT RESPONSE message is the same as the HSDPA status information shown in Tables 5 and 7.

However, if the RNC determines that it has different configuration/status information from that of the Node B, it can order the Node B to conduct an audit by transmitting the AUDIT REQUEST message to the Node B, without the need for receiving the AUDIT REQUIRED INDICATION message.

2.2. Operations

The operations of the Node B and the RNC in accordance with the second embodiment of the present invention will be described in more detail herein below.

2.2.1 Operation of Node B

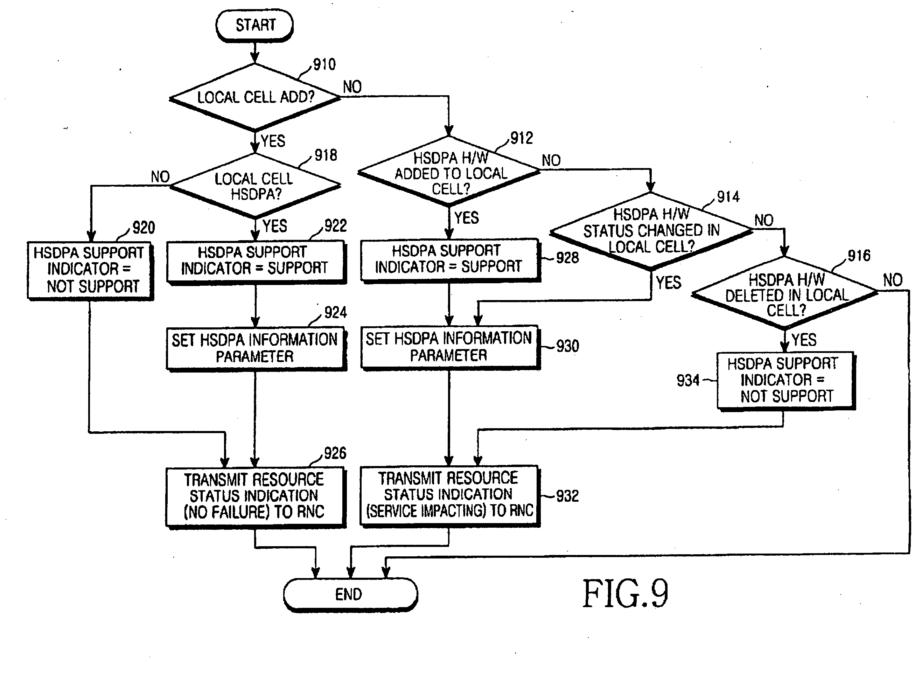

FIG. 9 is a flowchart illustrating a control operation in a Node B for reporting an HSDPA hardware change to the RNC, when a change occurs in the HSDPA hardware, according to a second embodiment of the present invention. Referring to FIG. 9, the Node B determines if a local cell has been added in step 910. If the local cell has been added, the Node B determines if the local cell supports HSDPA functionality in step 918. If the local cell does not support HSDPA functionality, the Node B sets HSDPA Support Indicator to Not Support in step 920 and proceeds to step 926. If the local cell does support the HSDPA functionality, the Node B sets HSDPA Support Indicator to Support in step 922, sets HSDPA information about the local cell in HSDPA Information in step 924, and proceeds to step 926.

The structure of HSDPA Information is shown in Table 5.

The Node B sets local cell information and HSDPA resource information about the local cell and transmits it to the RNC by a RESOURCE STATUS INDICATION (No Failure) message in step 926.

In the absence of a local cell to be added, the Node B determines if an HSDPA hardware device has been added to a local cell in step 912. If the HSDPA hardware device has been added, the Node B sets HSDPA Support Indicator to Support in step 928 and sets HSDPA information about the local cell in HSDPA Information in step 930. The Node B sets HSDPA resource change information about the local cell and transmits it to the RNC by a RESOURCE STATUS INDICATION (No Failure) message in step 932

In step 914, the Node B determines if an HSDPA hardware status in a local cell has been changed. If the HSDPA hardware status has been changed, the Node B sets HSDPA Support Indicator to Not Support in step 934 and proceeds to step 932.

In step 916, the Node B determines if an HSDPA hardware device has been deleted in a local cell. If the HSDPA hardware device has been deleted, the Node B sets HSDPA Support Indicator to Not Support in step 934 and proceeds to step 932.

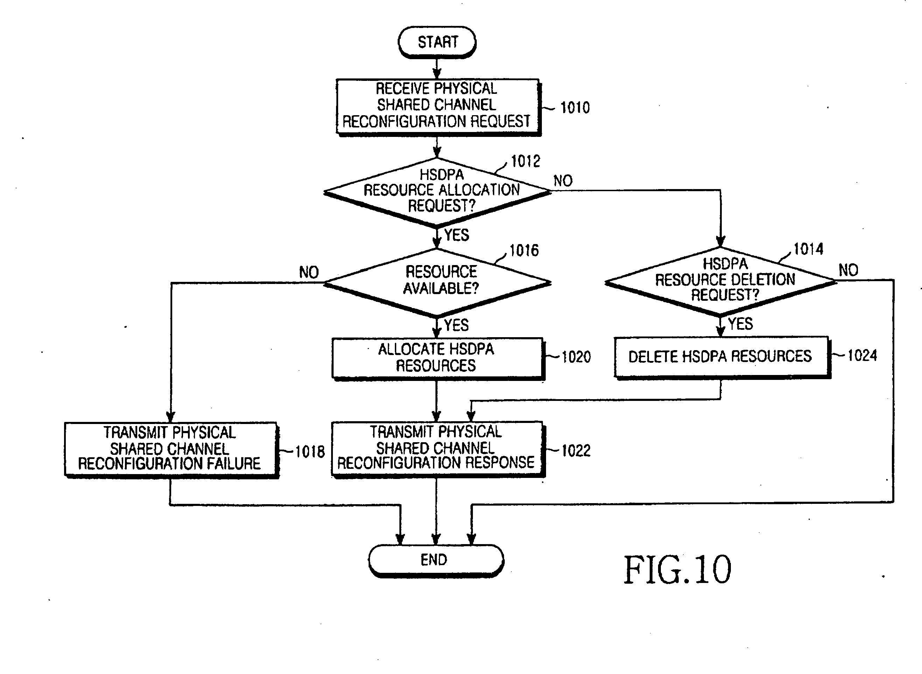

FIG. 10 is a flowchart illustrating a control operation in the Node B for allocating HSDPA resources as requested by the RNC according to the second embodiment of the present invention. Referring to FIG. 10, the Node B receives a PHYSICAL SHARED CHANNEL RECONFIGURATION REQUEST message from the RNC in step 1010 and determines if the received message requests allocation of HSDPA resources to Cell x in step 1012. If the received message requests allocation of HSDPA resources to Cell x, the Node B determines if the requested HSDPA resources are available in step 1016. If HSDPA resources are available in a local cell to which Cell x has been mapped, the Node B proceeds to step 1020. If the HSDPA resources are not available in the local cell, the Node B proceeds to step 1018.

The Node B allocates the HSDPA resources requested by the RNC in step 1020 and notifies the RNC of a successful setup of the requested HSDPA resources by a PHYSICAL SHARED CHANNEL RECONFIGURATION RESPONSE message in step 1022. However, in step 1018, the Node B transmits to the RNC a PHYSICAL SHARED CHANNEL RECONFIGURATION FAILURE message indicating a failed setup of the requested HSDPA resources.

After receiving the PHYSICAL SHARED CHANNEL RECONFIGURATION REQUESTE message, the Node B determines if the RNC requests deletion of HSDPA resources allocated to Cell x in step 1014. If the RNC requests deletion of HSDPA resources allocated to Cell x, the Node B deletes the HSDPA resources of Cell x in step 1024 and transmits to the RNC a PHYSICAL SHARED CHANNEL RECONFIGURATION RESPONSE message indicating the successful deletion of the HSDPA resources in step 1022.

2.2.2 Operation of RNC

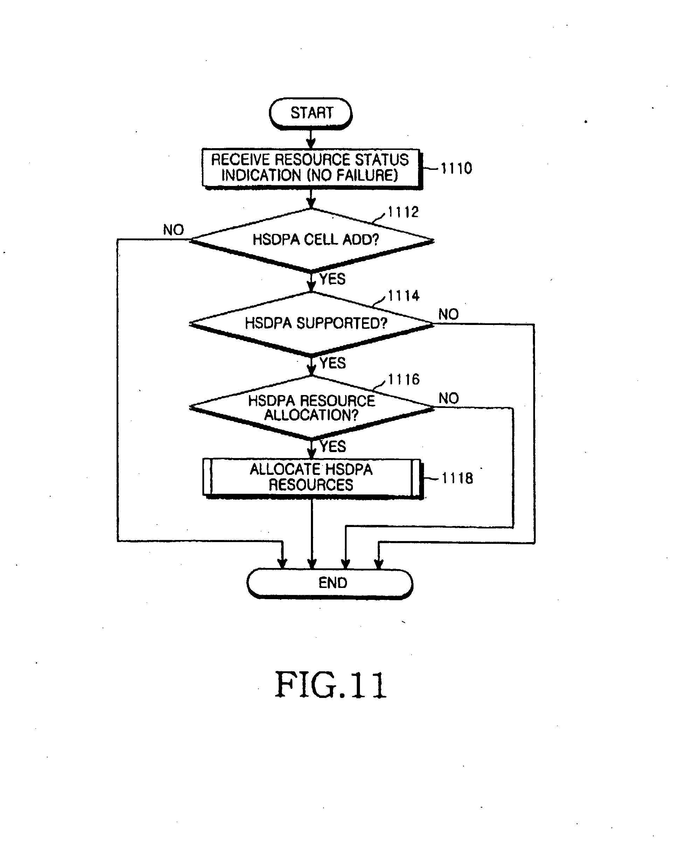

FIG. 11 is a flowchart illustrating a control operation after receiving the RESOURCE STATUS INDICATION (No Failure) message from the Node B in the RNC according to the second embodiment of the present invention. Referring to FIG. 11, upon receiving the RESOURCE STATUS INDICATION (No Failure) message from the Node B in step 1110, the RNC determines if a local cell has been added in step 1112. If a local cell has been added, the RNC determines if the local cell supports HSDPA functionality in step 1114. If the local cell supports HSDPA functionality, the RNC determines if the HSDPA service can be provided through Cell x to which the local cell has been mapped in step 1116. That is, the RNC determines whether to allocate HSDPA resources by determining HSDPA service availability through Cell x. If the HSDPA resources can be allocated, the RNC performs the HSDPA resource allocation procedure illustrated in FIG. 13 in step 1118.

In accordance with the second embodiment of the present invention, when Cell x did not support HSDPA service, new HSDPA resources are allocated to Cell x.

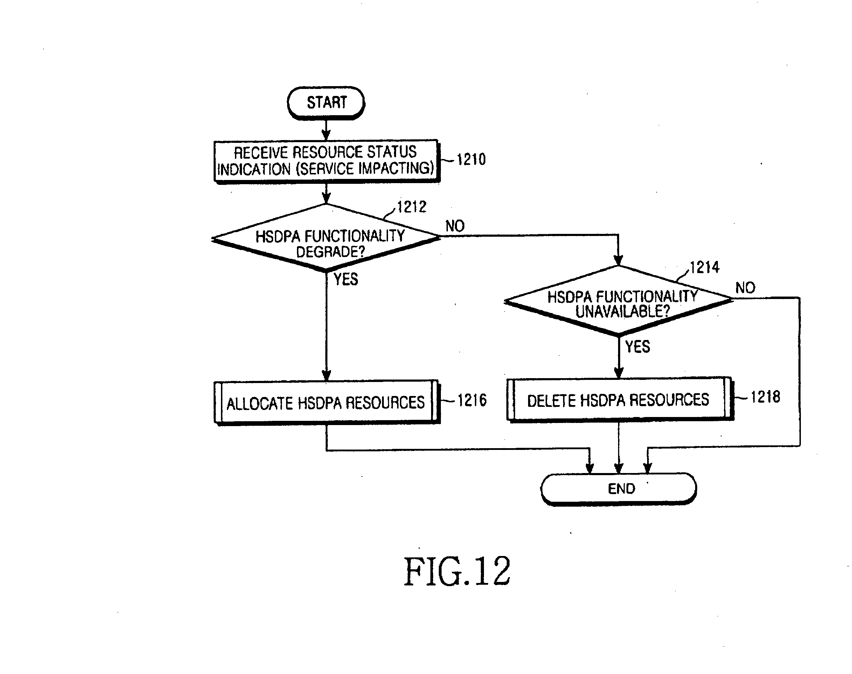

FIG. 12 is a flowchart illustrating a control operation after receiving the RESOURCE STATUS INDICATION (Service Impacting) message from the Node B in the RNC according to the second embodiment of the present invention. Referring to FIG. 12, receiving the RESOURCE STATUS INDICATION (Service Impacting) message from the Node B in step 1210, the RNC determines from HSDPA Status Information set in the received message if HSDPA functionality related to Cell x receiving the HSDPA service has been degraded in step 1212. If the HSDPA functionality has been degraded, the RNC proceeds to step 1216, but otherwise, it proceeds to step 1214. In step 1216, the RNC performs an HSDPA resource reallocation operation to compensate for the HSDPA functionality degradation in the procedure illustrated in FIG. 13.

In step 1214, the RNC determines from HSDPA Information set in the received message if HSDPA functionality related to Cell x receiving the HSDPA service is available. If the HSDPA functionality is unavailable, the RNC deletes HSDPA resources allocated to Cell x in the procedure illustrated in FIG. 14.

### 3. Third Embodiment

A third embodiment of the present invention provides a method of reporting a change in the HSDPA capability of a Node B to an RNC by the Node B when the HSDPA capability has been changed due to a change in HSDPA hardware. A new concept, i.e., HSDPA cell, is introduced here.

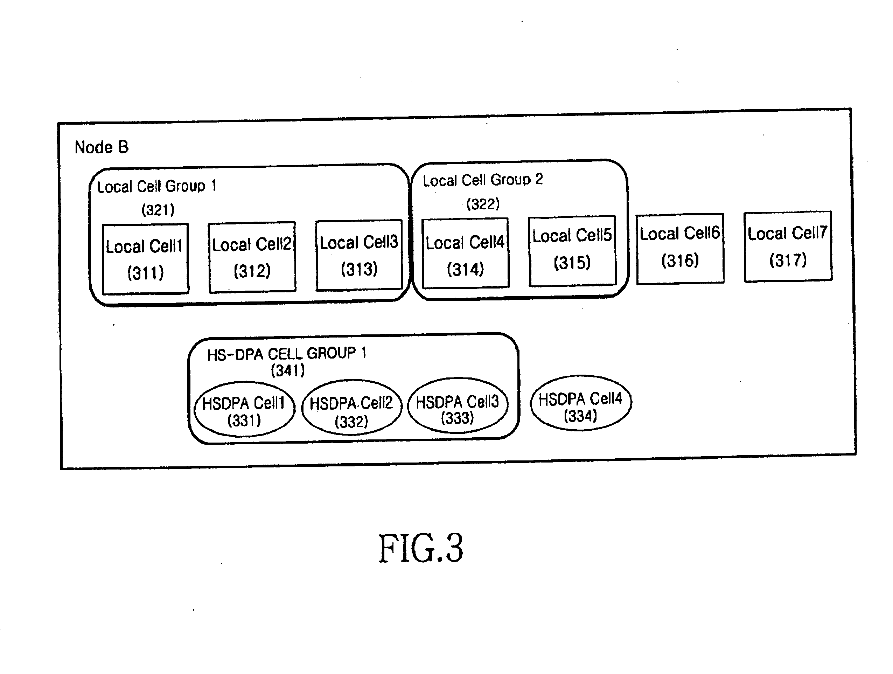

FIG. 3 illustrates a Node B to which the concept of HDPA cell is applied. Referring to FIG. 3, the Node B includes a plurality of local cell groups 321 and 322 and an HSDPA cell group 341. The local cell groups 321 and 322 each include a plurality of local cells. The first local cell group 321 has first, second, and third local cells 311, 312, and 313, and the second local cell group 322 includes fourth and fifth local cells 314 and 315. The HSDPA cell group 341 includes a plurality of HSDPA cells 331, 332, and 333. Sixth and seventh local cells belong to none of the local cell groups. A fourth HSDPA cell 324 belongs to none of HSDPA cell groups. An HSDPA cell manages and controls HSDPA functionality, and resources such as HS-PDSCH, HS-SCCH, and MAC-hs.

### 3.1 Signaling

### 3.1.1 Signaling at Initialization for HSDPA Service

When an HSDPA cell is added as HSDPA hardware is initialized, or when the HSDPA functionality is partially or wholly removed, and thus an HSDPA cell is removed due to removal of an HSDPA hardware device, the Node B reports the situation to the RNC by a RESOURCE STATUS INDICATION (No Failure) message.

Referring to FIG. 1, at an initialization for HSDPA, the Node B 10 transmits its HSDPA cell information to the CRNC 20 by a RESOURCE STATUS INDICATION (No Failure) message in step 110. However, when addition or removal of an HSDPA hardware device results in addition or removal of an HSDPA cell in the Node B 10, the Node B 10 reports this situation to the CRNC 20 by the RESOURCE STATUS INDICATION (No Failure) message in step 110. That is, the Node B 10 reports information about local cells/local cell groups and HSDPA cell information to the CRNC 20 by the RESOURCE STATUS INDICATION (No Failure) message.

The RNC maps local cells to Cells by a Call Setup procedure and maps HSDPA cells to Cells by a Physical Shared Channel Reconfiguration procedure.

FIG. 4 illustrates Cells constructed by a Cell Setup/Common Transport Channel Setup/Physical Shared Channel Reconfiguration procedure. Referring to FIG. 4, a second cell 452 (Cell 2) includes a second local cell 412 (Local Cell 2) and a first HSDPA cell 431 (HSDPA Cell 1). The RNC can add HSDPA functionality to a cell based on the HSDPA cell information by the Physical Shared Channel Reconfiguration procedure.

Table 8 below shows the structure of a RESOURCE STATUS INDICATION message that the Node B transmits to the RNC upon initialization for HSDPA according to the third embodiment of the present invention.

(Table 8)

| IE/Group Name | Presence | Range |
|---|---|---|
| Message Discriminator | M | |

(continued)

| IE/Group Name | Presence | Range |
|---|---|---|
| Message Type | M | |
| Transaction ID | M | |
| CHOICE Indication Type | M | |
| >No Failure | | |
| >>Local Cell Information | | 1..<max LocalCellinNodeB> |
| ... (omitted) | | |
| >>Local Cell Group Information | | 0..<maxLocalCellinNodeB> |
| ... (omitted) | | |
| >>Power Local Cell Group Information | | 0..<maxLocalCellinNodeB> |
| ... (omitted) | | |
| **>>HSDPA Cell Information** | | 0..<maxHSDPACellinNodeB> |
| >>>HSDPA Cell ID | M | |
| >>>Add/Delete Indicator | M | |
| >>> HSDPA Cell Group ID | O | |
| >>>MAC-hs Buffer Credit | C-add | |
| >>>Maximum HS-PDSCH code | C-add | |
| >>>Maximum DL Power Capability | C-add | |
| >>> ??? | | |

In Table 8, HSDPA Cell Information includes the following parameters.

HSDPA Cell ID: An ID that identifies an HSDPA cell in the Node B.

Add/Delete Indicator: If Add, it indicates addition of an HSDPA cell. If Delete, it indicates deletion of an HSDPA cell.

HSDPA Cell Group ID: An ID that identifies an HSDPA cell group to which an HSDPA cell belongs.

MAC-hs Buffer Credit: A parameter indicating the maximum capacity of the HSDPA functionality for the HSDPA cell. It is a Mac-hs buffer size and included when Add/Delete Indicator is set to Add.

Maximum HS-PDSCH Code: The maximum number of HS-PDSCH codes that can be processed in the HSDPA cell.

Maximum DL Power Capability: The maximum power supported by the HSDPA cell. It is included if Add/Delete Indicator is set to Add.

Along with the definition of HSDPA cell, a PHYSICAL SHARED CHANNEL RECONFIGURATION REQUEST message is modified as follows.

(Table 9)

| IE/Group Name | Presence | Range |
|---|---|---|
| Message Discriminator | M | |
| Message Type | M | |
| Transaction ID | M | |
| C-ID | M | |

(continued)

| IE/Group Name | Presence | Range |
|---|---|---|
| SFN | O | |
| HSDPA Cell ID | 0 | |
| HS-PDSCH and HS-SCCH Total Power | 0 | |
| HS-PDSCH and HS-SCCH Scrambling Code | 0 | |
| HS-PDSCH FDD Code Information | | 0..1 |
| HS-SCCH FDD Code Information | | 0..1 |

In Table 9, HSDPA Cell ID is added to the message to thereby define the mapping relationship between C-ID and HSDPA Cell ID.

3.1.2 Signaling in the Case of Change in HSDPA Service Capability

When the initially reported HSDPA capability of an HSDPA cell is changed or the HSDPA capability of a cell to which HSDPA resources were allocated, the Node B reports the HSDPA capability change to the RNC by a RESOURCE STATUS INDICATION (Service Impacting) message.
Table 10 below illustrates the structure of the RESOURCE STATUS INDICATION (Service Impacting) message.

(Table 10)

| IE/Group Name | Presence | Range |
|---|---|---|
| Message Discriminator | M | |
| Message Type | M | |
| Transaction ID | M | |
| CHOICE Indication Type | M | |
| >Service Impacting | | |
| >>Local Cell Information | | 0..<maxLocalCellinNodeB> |
| ... (omitted) | | |
| >>Local Cell Group Information | | 0..<maxLocalCellinNodeB> |
| ... (omitted) | | |
| >>Power Local Cell Group Information | | 0..<maxLocalCellinNodeB> |
| ... (omitted) | | |
| >>Communication Control Port Information | | 0..<maxCCPinNodeB> |
| ... (omitted) | | |
| >>Cell Information | | 0..<maxCellinNodeB> |
| >>>C-ID | M | |
| >>>Resource Operational State | O | |
| >>>Availability Status | O | |
| ... (omitted) | | |
| **>>>HS-PDSCH Status Information** | | 0..1 |
| >>>>Resource Operational State | M | |
| >>>>Availability Status | M | |
| **>>>HS-SCCH Status Information** | | 0..1 |

(continued)

| IE/Group Name | Presence | Range |
|---|---|---|
| >>>>Resource Operational State | M | |
| >>>>Availability Status | M | |
| >>HSDPA Cell Information | | 0..<maxHSDPACellinNodeB> |
| >>>HSDPA Cell ID | M | |
| >>>MAC-hs Buffer Credit | O | |
| >>>Maximum HS-PDSCH code | O | |
| >>>Maximum DL Power Capability | O | |
| >>> ??? | | |

In Table 10, HSDPA Cell Information is the same as HSDPA Cell Information of Table 8. Cell Information includes HS-PDSCH Status Information and HS-SCCH Status Information to report HSDPA service capability. The HSDPA Cell Information may include HSDPA Information as shown in Table 6.

If MAC-hs Buffer Credit, Maximum HS-PDSCH code, or Maximum DL Power Capability in HSDPA Cell Information is changed, the RNC can re-set up HSDPA resources to the Node B according to the changed capability by the Physical Shared Channel Reconfiguration procedure.

If a change occurs in the capability of HSDPA Cell y while Cell x is providing the HSDPA service through HSDPA Cell y, Cell x cannot provide the HSDPA service successfully any more and attempts a resource switching in the following manner. If the maximum number of HSDPA cells is greater than the current number of cells to which the HSDPA service is allocated, the RNC allocates an unused HSDPA cell, HSDPA Cell z to Cell x by the Physical Shared Channel Reconfiguration procedure. The PHYSICAL SHARED CHANNEL RECONFIGURATION REQUEST message includes the ID of HSDPA Cell z. Also, the RNC re-establishes an HSDPA RL for a UE receiving the HSDPA service through Cell x to thereby continue the HSDPA service through Cell x. The RNC then notifies the UE of a change such as changed HS-PDSCH (High Speed-Physical Downlink Shared CHannel) or HS-SCCH (High Speed-Shared Control CHannel) code information (MAC-hs reset needed) by an RRC message, if the change occurs.

3.1.3 Signaling Procedure for Different Configuration Information between Node B and RNC

If the RNC or the Node B determines that configuration/status information differs between them, an audit operation is performed. When determining that the configuration/status information of the RNC is different from that of the Node B, the Node B notifies the RNC that an audit is required by an AUDIT REQUIRED INDICATION message. The RNC then orders the Node B to conduct the audit by an AUDIT REQUEST message. In accordance with the third embodiment of the present invention, upon receiving the AUDIT REQUEST message, the Node B transmits the following HSDPA information to the RNC by an AUDIT RESPONSE message.

1) HSDP Cell Information

> HSDPA Cell ID
> MAC-hs Buffer Credit
> Maximum HS-PDSCH Code
> Maximum DL Power Capability

2) Cell Information

> HSDPA Information

>> Resource Operational State
>> Availability Status

> HS-PDSCH Status Information

>> Resource Operational State

>> Availability Status

> HS-SCCH Status Information

>> Resource Operational State
>> Availability Status

Information included for reporting the HSDPA status in the AUDIT RESPONSE message is the same as the HSDPA status information illustrated in Table 10.

However, if the RNC determines that it has different configuration/status information from that of the Node B, it can order the Node B to conduct an audit by transmitting the AUDIT REQUEST message to the Node B, without the need for receiving the AUDIT REQUIRED INDICATION message.

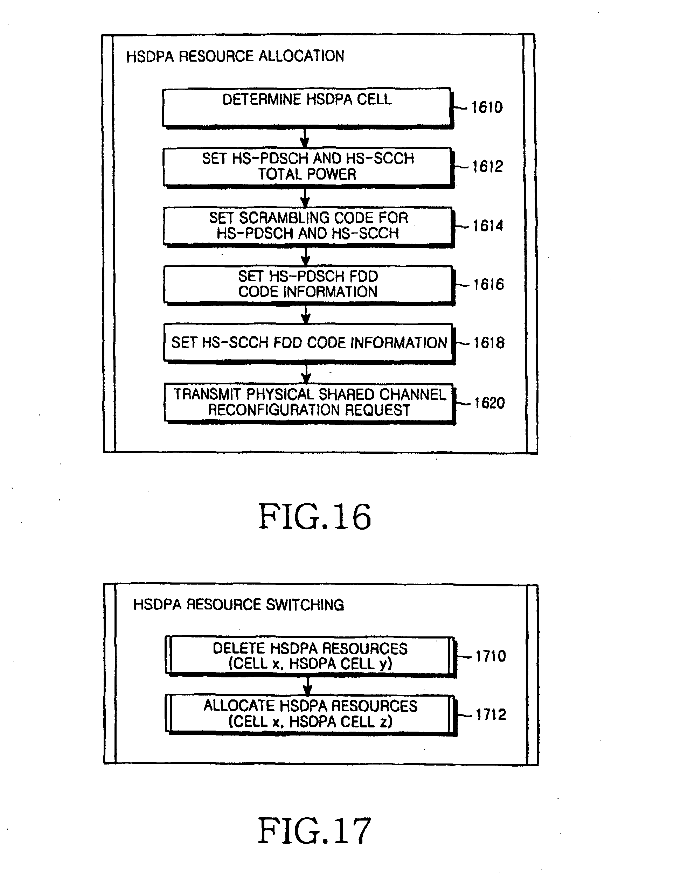

HSDPA resource allocation and switching will be described below with reference to FIGs. 16 and 17.

FIG. 16 is a flowchart illustrating an HSDPA resource allocation procedure according to the third embodiment of the present invention. Referring to FIG. 16, the RNC determines HSDPA Cell y for Cell x based on HSDPA Cell Information set in a RESOURCE STATUS INDICATION message received from the Node B in step 1610 and sets a maximum power level for the HS-PDSCH and the HS-SCCH for Cell x to which the RNC determines to provide the HSDPA service in step 1612. The RNC determines a scrambling code for the HS-PDSCH and the HS-SCCH in step 1614. The RNC sets FDD code information based on a code allocated to the HS-PDSCH in step 1616 and sets FDD code information based on a code allocated to the HS-SCCH in step 1618. In step 1620, the RNC generates a PHYSICAL SHARED CHANNEL RECONFIGURATION REQUEST message containing the above HSDPA resource information and transmits it to the Node B.

FIG. 17 is a flowchart illustrating an HSDPA resource switching procedure according to the third embodiment of the present invention. Referring to FIG. 17, if HSDPA resources allocated to Cell x are invalid and thus the HSDPA service is unavailable to Cell x, the RNC deletes the HSDPA resources from Cell x in step 1810, as described with reference to FIG. 14. If there is HSDPA Cell z that is not mapped to any cell in the Node B, the RNC reallocates HSDPA Cell z to Cell x in the procedure described in FIG 16, in step 1712.

In accordance with the present invention, as described above, an RNC manages the status of resources allocated for HSDPA service, thereby efficiently allocating resources in an HSDPA mobile communication system. Furthermore, resource switching is fast even when the HSDPA service is unavailable using the allocated resources. Therefore, the HSDPA service is stably provided.

While the present invention has been shown and described with reference to certain preferred embodiments thereof, it will be understood by those skilled in the art that various changes in form and details may be made therein without departing from the scope of the present invention as defined by the appended claims.

**Claims**

1. A method by a Node B for reporting a status of resources used for a high speed packet data service to an RNC, Radio Network Controller, in a mobile communication system in which the RNC allocates resources for the high speed packet data service and the Node B includes at least one local cell for providing the high packet data service using the allocated resources among a plurality of local cells, the method comprising the steps of:

   determining on a local cell basis if the local cells support the high speed packet data service; and
   transmitting to the RNC per-local cell-based availability information indicating an availability of the high speed packet data service according to the determination,
   further comprising the step of transmitting to the RNC the per-local cell-based availability information of the Node B, if the Node B and the RNC have different per-local cell-based availability information, and
   further comprising the step of transmitting, to the RNC, high speed packet data service-related information regarding local cells supporting the high speed packet data service, along with the per-local cell-based availability information,
   **characterized in that**
   the high speed packet data service-related information includes, with respect to each of the local cells supporting the high speed packet data service, a maximum size of a buffer used for the high speed packet data service, a maximum number of codes used for the high speed packet data service, and a maximum power level for the high speed packet data service.

2. The method of claim 1, wherein the high speed packet data service-related information includes information about a resource operation state and availability status of a cell to which each of the local cells supporting the high speed packet data service is mapped.

3. The method of claim 1, further comprising the steps of:

receiving information indicating resources allocated for the high speed packet data service from the RNC; and allocating the resources to the at least one local cell that supports the high speed packet data service.

4. The method of claim 3, wherein the step of allocating the resources comprises the step of allocating resources on a cell basis to one of the local cells that support the high speed packet data service.

5. The method of claim 1, further comprising the step of transmitting, to the RNC, information indicating if a local cell supports the high speed packet data service, when a change occurs in the local cell supporting the high speed packet data service.

6. A method by an RNC, Radio Network Controller, for allocating resources for a high speed packet data service in a mobile communication system in which the RNC and a Node B includes at least one local cell for providing the high packet data service using the allocated resources among a plurality of local cells, the method comprising the steps of:

receiving, from the Node B, per-local cell-based availability information indicating an availability of the high speed packet data service in the local cells; determining a maximum number of cells that support the high speed packet data service based on the per-local cell-based availability information; and allocating the resources for the high speed packet data service based on the maximum number of cells.

7. The method of claim 6, further comprising the step of changing the maximum number of cells based on a report from the Node B.

8. The method of claim 6, further comprising the step of requesting the Node B to transmit the per-local cell-based availability information of the Node B, if the Node B and the RNC have different per-local cell-based availability information.

9. The method of claim 8, further comprising the step of receiving, from the Node B, high speed packet data service-related information regarding local cells supporting the high speed packet data service, along with the per-local cell-based availability information of the Node B.

10. The method of claim 9, wherein the high speed packet data service-related information includes, with respect to each of the local cells supporting the high speed packet data service, a maximum size of a buffer used for the high speed packet data service, a maximum number of codes used for the high speed packet data service, and a maximum power level for the high speed packet data service.

11. The method of claim 9, wherein the high speed packet data service-related information includes information about a resource operation state and availability status of a cell to which each of the local cells supporting the high speed packet data service is mapped.

12. A method by a Node B for reporting a status of resources used for a high speed packet data service to an RNC, Radio Network Controller, in a mobile communication system in which the RNC allocates resources for the high speed packet data service and the Node B provides the high speed packet data service using the allocated resources on a cell basis, the method comprising the steps of:

detecting cells that can support the high speed packet data service; counting a maximum number of cells that can support the high speed packet data service; and transmitting, to the RNC, information indicating the maximum number of cells.

13. The method of claim 12, further comprising the steps of:

receiving information indicating the resources allocated for the high speed packet data service from the RNC; and allocating the resources to a cell that supports the high speed packet data service.

**14.** The method of claim 12, further comprising the step of transmitting change information to the RNC, when a change occurs in a cell supporting the high speed packet data service.

**15.** The method of claim 14, wherein the change information includes information about a resource operation state and availability status of a cell to which each local cell is mapped.

**16.** A method by an RNC, Radio Network Controller, for allocating resources for a high speed packet data service in a mobile communication system in which the RNC and a Node B provides the high packet data service using the allocated resources on a cell basis, the method comprising the steps of:

receiving, from the Node B, information indicating a maximum number of cells supporting the high speed packet data service; and
allocating resources for the high speed packet data service based on the maximum number of cells.

**17.** The method of claim 16, further comprising the step of changing the maximum number of cells based on a report from the Node B.

**18.** The method of claim 16, further comprising the step of receiving information about a resource operation state and availability status of a cell to which each local cell is mapped, when the Node B reports a change of the maximum number of cells to the RNC.

## Patentansprüche

**1.** Verfahren zum Melden eines Status von Ressourcen, die für einen Hochgeschwindigkeits-Paketdatendienst eingesetzt werden, durch einen Node B an einen RNC (Radio Network Controller) in einem Mobilkommunikationssystem, in dem der RNC Ressourcen für den Hochgeschwindigkeits-Paketdatendienst zuweist und der Node B von einer Vielzahl lokaler Zellen wenigstens eine lokale Zelle zum Bereitstellen des Hochgeschwindigkeits-Paketdatendienstes unter Einsatz der zugewiesenen Ressourcen enthält, wobei das Verfahren die folgenden Schritte umfasst:

Feststellen, ob die lokalen Zellen den Hochgeschwindigkeits-Paketdatendienst unterstützen, auf Basis lokaler Zellen; und
Senden auf lokalen Zellen basierender Verfügbarkeits-Informationen zu dem RNC, die eine Verfügbarkeit des Hochgeschwindigkeits-Paketdatendienstes entsprechend der Feststellung anzeigen,
wobei es des Weiteren den Schritt des Sendens der auf lokalen Zellen basierenden Verfügbarkeitsinformationen des Node B zu dem RNC umfasst, wenn der Node B und der RNC über unterschiedliche auf lokalen Zellen basierende Verfügbarkeits-Informationen verfügen, und
es des Weiteren den Schritt des Sendens von Informationen bezüglich des Hochgeschwindigkeits-Paketdatendienstes zu dem RNC, die lokale Zellen betreffen, die den Hochgeschwindigkeits-Paketdatendienst unterstützen, zusammen mit den auf lokalen Zellen basierenden Verfügbarkeitsinformationen umfasst,
**dadurch gekennzeichnet, dass**
die Informationen bezüglich des Hochgeschwindigkeits-Paketdatendienstes hinsichtlich jeder der lokalen Zellen, die den Hochgeschwindigkeits-Paketdatendienst unterstützen, eine maximale Größe eines für den Hochgeschwindigkeits-Paketdatendienst verwendeten Puffers, eine maximale Anzahl für den Hochgeschwindigkeits-Paketdatendienst verwendeter Codes sowie einen maximalen Leistungspegel für den Hochgeschwindigkeits-Paketdatendienst enthalten.

**2.** Verfahren nach Anspruch 1, wobei die Informationen bezüglich des Hochgeschwindigkeits-Paketdatendienstes Informationen über einen Ressourcen-Betriebszustand und einen Verfügbarkeits-Status einer Zelle enthalten, der jede der lokalen Zellen zugeordnet wird, die den Hochgeschwindigkeits-Paketdatendienst unterstützen.

**3.** Verfahren nach Anspruch 1, das des Weiteren die folgenden Schritte umfasst:

Empfangen von Informationen, die Ressourcen anzeigen, die für den Hochgeschwindigkeits-Paketdatendienst zugewiesen werden, von dem RNC; und
Zuweisen der Ressourcen zu der wenigstens einen lokalen Zelle, die den Hochgeschwindigkeits-Paketdatendienst unterstützt.

**4.** Verfahren nach Anspruch 3, wobei der Schritt des Zuweisens der Ressourcen den Schritt des Zuweisens von Ressourcen auf Zellen-Basis zu einer der lokalen Zellen umfasst, die den Hochgeschwindigkeits-Paketdatendienst unterstützen.

**5.** Verfahren nach Anspruch 1, das des Weiteren den Schritt des Sendens von Informationen zu dem RNC umfasst, die anzeigen, ob eine lokale Zelle den Hochgeschwindigkeits-Paketdatendienst unterstützt, wenn eine Änderung in der lokalen Zelle stattfindet, die den Hochgeschwindigkeits-Paketdatendienst unterstützt.

**6.** Verfahren zum Zuweisen von Ressourcen für einen Hochgeschwindigkeits-Paketdatendienst durch einen RNC (Radio Network Controller) in einem Mobilkommunikationssystem, das über den RNC verfügt und in dem ein Node B von einer Vielzahl lokaler Zellen wenigstens eine lokale Zelle zum Bereitstellen des Hochgeschwindigkeits-Paketdatendienstes unter Einsatz der zugewiesenen Ressourcen enthält, und das Verfahren die folgenden Schritte umfasst:

Empfangen auf lokalen Zellen basierender Verfügbarkeits-Informationen von dem Node B, die eine Verfügbarkeit des Hochgeschwindigkeits-Paketdatendienstes in den lokalen Zellen anzeigen;
Bestimmen einer maximalen Anzahl von Zellen, die den Hochgeschwindigkeits-Paketdatendienst unterstützen, auf Grundlage auf lokalen Zellen basierender Verfügbarkeits-Informationen; und
Zuweisen der Ressourcen für den Hochgeschwindigkeits-Paketdatendienst auf Basis der maximalen Anzahl von Zellen.

**7.** Verfahren nach Anspruch 6, das des Weiteren den Schritt des Änderns der maximalen Anzahl von Zellen auf Basis einer Meldung von dem Node B umfasst.

**8.** Verfahren nach Anspruch 6, das des Weiteren den Schritt umfasst, in dem der Node B aufgefordert wird, die auf lokalen Zellen basierenden Verfügbarkeits-Informationen des Node B zu senden, wenn der Node B und der RNC über unterschiedliche auf lokalen Zellen basierenden Verfügbarkeits-Informationen verfügen.

**9.** Verfahren nach Anspruch 8, das des Weiteren den Schritt des Empfangens von Informationen bezüglich des Hochgeschwindigkeits-Paketdatendienstes von dem Node B, die lokale Zellen betreffen, die den Hochgeschwindigkeits-Paketdatendienst unterstützen, zusammen mit den auf lokalen Zellen basierenden Verfügbarkeits-Informationen des Node B umfasst.

**10.** Verfahren nach Anspruch 9, wobei die Informationen bezüglich des Hochgeschwindigkeits-Paketdatendienstes hinsichtlich jeder der lokalen Zellen, die den Hochgeschwindigkeits-Paketdatendienst unterstützen, eine maximale Größe eines für den Hochgeschwindigkeits-Paketdatendienst verwendeten Puffers, eine maximale Anzahl für den Hochgeschwindigkeits-Paketdatendienst verwendeter Codes sowie einen maximalen Leistungspegel für den Hochgeschwindigkeits-Paketdatendienst enthalten.

**11.** Verfahren nach Anspruch 9, wobei die Informationen bezüglich des Hochgeschwindigkeits-Paketdatendienstes Informationen über einen Ressourcen-Betriebszustand und einen Verfügbarkeits-Status einer Zelle enthalten, der jede der lokalen Zellen zugeordnet wird, die den Hochgeschwindigkeits-Paketdatendienst unterstützen.

**12.** Verfahren zum Melden eines Status von Ressourcen, die für einen Hochgeschwindigkeits-Paketdatendienst eingesetzt werden, durch einen Node B an einen RNC (Radio Network Controller) in einem Mobilkommunikationssystem, in dem der RNC Ressourcen für den Hochgeschwindigkeits-Paketdatendienst zuweist und der Node B den Hochgeschwindigkeits-Paketdatendienst unter Einsatz der zugewiesenen Ressourcen auf Zellen-Basis bereitstellt, wobei das Verfahren die folgenden Schritte umfasst:

Erfassen von Zellen, die den Hochgeschwindigkeits-Paketdatendienst unterstützen können;
Zählen einer maximalen Anzahl von Zellen, die den Hochgeschwindigkeits-Paketdatendienst unterstützen können; und
Senden von Informationen, die die maximale Anzahl von Zellen anzeigen, zu dem RNC.

**13.** Verfahren nach Anspruch 12, das des Weiteren die folgenden Schritte umfasst:

Empfangen von Informationen, die Ressourcen anzeigen, die für den Hochgeschwindigkeits-Paketdatendienst zugewiesen werden, von dem RNC; und

Zuweisen der Ressourcen zu einer lokalen Zelle, die den Hochgeschwindigkeits-Paketdatendienst unterstützt.

**14.** Verfahren nach Anspruch 12, das des Weiteren den Schritt des Sendens von Änderungs-Informationen zu dem RNC umfasst, wenn eine Änderung in einer Zelle stattfindet, die den Hochgeschwindigkeits-Paketdatendienst unterstützt.

**15.** Verfahren nach Anspruch 14, wobei die Änderungs-Informationen Informationen über einen Ressourcen-Betriebszustand und einen Verfügbarkeits-Status einer Zelle enthalten, der jede lokale Zelle zugeordnet wird.

**16.** Verfahren zum Zuweisen von Ressourcen für einen Hochgeschwindigkeits-Paketdatendienst durch einen RNC (Radio Network Controller) in einem Mobilkommunikationssystem, das über den RNC verfügt und in dem ein Node B den Hochgeschwindigkeits-Paketdatendienst unter Einsatz der zugewiesenen Ressourcen auf Zellen-Basis bereitstellt, wobei das Verfahren die folgenden Schritte umfasst:

Empfangen von Informationen, die eine maximale Anzahl von Zellen anzeigen, die den Hochgeschwindigkeits-Paketdatendienst unterstützen, von dem Node B; und
Zuweisen von Ressourcen für den Hochgeschwindigkeits-Paketdatendienst auf Basis der maximalen Anzahl von Zellen.

**17.** Verfahren nach Anspruch 16, das des Weiteren den Schritt des Änderns der maximalen Anzahl von Zellen auf Basis einer Meldung von dem Node B umfasst.

**18.** Verfahren nach Anspruch 16, das des Weiteren den Schritt des Empfangens von Informationen über einen Ressourcen-Betriebszustand und einen Verfügbarkeits-Status einer Zelle umfasst, der jede lokale Zelle zugeordnet wird, wenn der Node B eine Änderung der maximalen Anzahl von Zellen an den RNC meldet.

**Revendications**

**1.** Procédé pour rapporter, par un noeud B, un statut de ressources utilisées pour un service de données par paquets haute vitesse à un RNC, contrôleur de réseau radio, dans un système de communication mobile dans lequel le RNC alloue des ressources pour le service de données par paquets haute vitesse et le noeud B comprend au moins une cellule locale pour assurer le service de données par paquets haute vitesse en utilisant les ressources allouées parmi une pluralité de cellules locales, le procédé comprenant les étapes consistant à :

- déterminer par cellule locale si les cellules locales supportent le service de données par paquets haute vitesse ; et
- transmettre au RNC des informations de disponibilité par cellule locale indiquant une disponibilité du service de données par paquets haute vitesse suivant la détermination,
- le procédé comprenant en outre l'étape consistant à transmettre au RNC les informations de disponibilité par cellule locale du noeud B si le noeud B et le RNC ont des informations de disponibilité par cellule locale différentes, et
- le procédé comprenant en outre l'étape consistant à transmettre, au RNC, des informations relatives au service de données par paquets haute vitesse concernant des cellules locales supportant le service de données par paquets haute vitesse, avec les informations de disponibilité par cellule locale,
- **caractérisé en ce que** :
- les informations relatives au service de données par paquets haute vitesse comprennent, par rapport à chacune des cellules locales supportant le service de données par paquets haute vitesse, une taille maximale d'un tampon utilisé pour le service de données par paquets haute vitesse, un nombre maximum de codes utilisés pour le service de données par paquets haute vitesse et un niveau de puissance maximale pour le service de données par paquets haute vitesse.

**2.** Procédé selon la revendication 1, pour lequel les informations relatives au service de données par paquets haute vitesse comprennent des informations au sujet d'un état d'utilisation des ressources et d'un statut de disponibilité d'une cellule à laquelle chacune des cellules locales supportant le service de données par paquets haute vitesse est mappée.

**3.** Procédé selon la revendication 1, comprenant en outre les étapes consistant à :

- recevoir des informations indiquant les ressources allouées pour le service de données par paquets haute vitesse du RNC ; et
- allouer les ressources à l'au moins une cellule locale qui supporte le service de données par paquets haute vitesse.

**4.** Procédé selon la revendication 3, pour lequel l'étape d'allocation de ressources comprend l'étape d'allocation de ressources par cellule à une des cellules locales qui supportent le service de données par paquets haute vitesse.

**5.** Procédé selon la revendication 1, comprenant en outre l'étape consistant à transmettre, au RNC, des informations indiquant si une cellule locale supporte le service de données par paquets haute vitesse, lorsqu'un changement se produit dans la cellule locale supportant le service de données par paquets haute vitesse.

**6.** Procédé pour allouer, par un RNC, contrôleur de réseau radio, des ressources pour un service de données par paquets haute vitesse dans un système de communication mobile comprenant le RNC et dans lequel un noeud B comprend au moins une cellule locale pour assurer le service de données par paquets haute vitesse en utilisant les ressources allouées parmi une pluralité de cellules locales, le procédé comprenant les étapes consistant à :

- recevoir, du noeud B, des informations de disponibilité par cellule locale indiquant une disponibilité du service de données par paquets haute vitesse dans les cellules locales ;
- déterminer un nombre maximum de cellules qui supportent le service de données par paquets haute vitesse en fonction des informations de disponibilité par cellule locale ; et
- allouer les ressources pour le service de données par paquets haute vitesse en fonction du nombre maximum de cellules.

**7.** Procédé selon la revendication 6, comprenant en outre l'étape consistant à changer le nombre maximum de cellules en fonction d'un rapport du noeud B.

**8.** Procédé selon la revendication 6, comprenant en outre l'étape consistant à demander au noeud B de transmettre les informations de disponibilité par cellule locale du noeud B si le noeud B et le RNC ont des informations de disponibilité par cellule locale différentes.

**9.** Procédé selon la revendication 8, comprenant en outre l'étape consistant à recevoir, du noeud B, des informations relatives au service de données par paquets haute vitesse concernant des cellules locales supportant le service de données par paquets haute vitesse, avec les informations de disponibilité par cellule locale du noeud B.

**10.** Procédé selon la revendication 9, pour lequel les informations relatives au service de données par paquets haute vitesse comprennent, par rapport à chacune des cellules locales supportant le service de données par paquets haute vitesse, une taille maximale d'un tampon utilisé pour le service de données par paquets haute vitesse, un nombre maximum de codes utilisés pour le service de données par paquets haute vitesse et un niveau de puissance maximale pour le service de données par paquets haute vitesse.

**11.** Procédé selon la revendication 9, pour lequel les informations relatives au service de données par paquets haute vitesse comprennent des informations au sujet d'un état d'utilisation des ressources et d'un statut de disponibilité d'une cellule à laquelle chacune des cellules locales supportant le service de données par paquets haute vitesse est mappée.

**12.** Procédé pour rapporter, par un noeud B, un statut de ressources utilisées pour un service de données par paquets haute vitesse à un RNC, contrôleur de réseau radio, dans un système de communication mobile dans lequel le RNC alloue des ressources pour le service de données par paquets haute vitesse et le noeud B assure le service de données par paquets haute vitesse en utilisant les ressources allouées par cellule, le procédé comprenant les étapes consistant à :

- détecter des cellules qui supportent le service de données par paquets haute vitesse ;
- compter un nombre maximum de cellules pouvant supporter le service de données par paquets haute vitesse ; et
- transmettre, au RNC, des informations indiquant le nombre maximum de cellules.

**13.** Procédé selon la revendication 12, comprenant en outre les étapes consistant à :

- recevoir des informations indiquant les ressources allouées pour le service de données par paquets haute vitesse du RNC ; et
- allouer les ressources à une cellule qui supporte le service de données par paquets haute vitesse.

**14.** Procédé selon la revendication 12, comprenant en outre l'étape consistant à transmettre des informations de changement au RNC lorsqu'un changement se produit dans une cellule supportant le service de données par paquets haute vitesse.

**15.** Procédé selon la revendication 14, pour lequel les informations de changement comprennent des informations au sujet d'un état d'utilisation des ressources et d'un statut de disponibilité d'une cellule à laquelle chaque cellule locale est mappée.

**16.** Procédé pour allouer, par un RNC, contrôleur de réseau radio, des ressources pour un service de données par paquets haute vitesse dans un système de communication mobile comprenant le RNC et dans lequel un noeud B assure le service de données par paquets haute vitesse en utilisant les ressources allouées par cellule, le procédé comprenant les étapes consistant à :

- recevoir, du noeud B, des informations indiquant un nombre maximum de cellules supportant le service de données par paquets haute vitesse ; et
- allouer les ressources pour le service de données par paquets haute vitesse en fonction du nombre maximum de cellules.

**17.** Procédé selon la revendication 16, comprenant en outre l'étape consistant à changer le nombre maximum de cellules en fonction d'un rapport du noeud B.

**18.** Procédé selon la revendication 16, comprenant en outre l'étape consistant à recevoir des informations au sujet d'un état d'utilisation des ressources et d'un statut de disponibilité d'une cellule à laquelle chaque cellule locale est mappée, lorsque le noeud B rapporte un changement du nombre maximum de cellules au RNC.

Node B(10)

INITIALIZATION/ HSDPA H/W ADDITION/REMOVAL

RESOURCE STATUS INDICATION (No FAILURE)(110)

CRNC(20)

PHYSICAL SHARED CHANNEL RECONFIGURATION REQUEST(120)

130 — HSDPA RESOURCE SETUP

PHYSICAL SHARED CHANNEL RECONFIGURATION RESPONSE(140)

FIG.1

CRNC(20)

HSDPA
FUNCTIONALITY
CHANGE

RESOURCE STATUS INDICATION
(SERVICE IMACTING) (210)

PHYSICAL SHARED CHANNEL
RECONFIGURATION REQUEST(220)

230 — HSDPA RESOURCE
DELETION

PHYSICAL SHARED CHANNEL
RECONFIGURATION RESPONSE(240)

PHYSICAL SHARED CHANNEL
RECONFIGURATION REQUEST(250)

260 — HSDPA RESOURCE
SETUP

PHYSICAL SHARED CHANNEL
RECONFIGURATION RESPONSE(270)

FIG.2

EP 1 531 586 B1

Node B

Local Cell Group 1
(321)

| Local Cell1 (311) | Local Cell2 (312) | Local Cell3 (313) |

Local Cell Group 2
(322)

| Local Cell4 (314) | Local Cell5 (315) |

Local Cell6 (316)

Local Cell7 (317)

HS-DPA CELL GROUP 1
(341)

HSDPA Cell1 (331)   HSDPA Cell2 (332)   HSDPA Cell3 (333)

HSDPA Cell4 (334)

# FIG.3

EP 1 531 586 B1

FIG.4

FIG.5

START → HSDPA H/W ADD? (510)

NO → HSDPA H/W DELETE? (512)

NO → HSDPA H/W STATUS CHANGE? (514)

HSDPA H/W ADD? YES → GENERATE HSDPA CELL (516) → Max Number of HSDPA Cells== Max Number of HSDPA Cells+1 (518)

HSDPA H/W DELETE? YES → DELETE HSDPA CELL (520) → Max Number of HSDPA Cells== Max Number of HSDPA Cells−1 (522)

→ TRANSMIT RESOURCE STATUS INDICATION (NO FAILURE) TO RNC (524) → END

HSDPA H/W STATUS CHANGE? YES → SET HSDPA INFORMATION (526) → TRANSMIT RESOURCE STATUS INDICATION (SERVICE IMPACTING) TO RNC (528) → END

NO → END

FIG.6

EP 1 531 586 B1

```
                                    ┌──────────┐
                                    │  START   │
                                    └────┬─────┘
                                         ↓
                          ┌──────────────────────────────┐
                          │ RECEIVE RESOURCE STATUS       │──710
                          │ INDICATION (NO FAILURE)       │
                          └──────────────┬───────────────┘
                                         ↓
                                                        712
              NO                  ◇─────────────────────◇
      ┌──────────────────────────<   HSDPA CELL ADD?     >
      │                           ◇─────────────────────◇
      ↓                                    │ YES
                714                         ↓
  ◇──────────────────────◇       ┌──────────────────────────┐
  <   HSDPA CELL DELETE?   >      │ Max HSDPA Cell In Node B ==│──716
  ◇──────────────────────◇       │ Max HSDPA Cell In Node B + 1│
NO│               │ YES           └────────────┬─────────────┘
  │               ↓                            ↓
  │    ┌──────────────────────────┐                  718
  │    │ Max HSDPA Cell In Node B ==│      ◇────────────────────◇   NO
  │    │ Max HSDPA Cell In Node B - 1│──722 <  HSDPA RESOURCE     >──┐
  │    └──────────────────────────┘      <   ALLOCATION?         >   │
  │                                       ◇────────────────────◇    │
  │                                              │ YES                │
  │                                              ↓                    │
  │                                    ┌──────────────────┐          │
  │                                    │ ALLOCATE HSDPA   │──720     │
  │                                    │ RESOURCES        │          │
  │                                    └────────┬─────────┘          │
  │                                             │                    │
  └─────────────────────────────────┐     ┌────┴────┐               │
                                     ↓     ↓         ↓               ↓
                                    ┌──────────────────┐
                                    │       END        │
                                    └──────────────────┘
```

## FIG.7

START

810 — RECEIVE RESOURCE STATUS INDICATION (SERVICE IMPACTING)

812 — HSDPA FUNCTIONALITY DEGRADE?

814 — HSDPA FUNCTIONALITY UNAVAILABLE?

818 — (NUMBER OF CURRENT HSDPA CELLS-NUMBER OF CURRENT CELLS HAVING HSDPA LOGICAL RESOURCES)≥1?

816 — ALLOCATE HSDPA RESOURCES

820 — SWITCH HSDPA RESOURCES

822 — DELETE HSDPA RESOURCES

YES / NO

END

FIG.8

FIG.9

EP 1 531 586 B1

FIG.10

FIG.11

FIG.12

EP 1 531 586 B1

HSDPA RESOURCE ALLOCATION

SET HS-PDSCH AND
HS-SCCH TOTAL POWER — 1300

SET SCRAMBLING CODE
FOR HS-PDSCH AND HS-SCCH — 1302

SET HS-PDSCH FDD
CODE INFORMATION — 1304

SET HS-SCCH FDD
CODE INFORMATION — 1306

TRANSMIT PHYSICAL SHARED CHANNEL
RECONFIGURATION REQUEST — 1308

FIG.13

HSDPA RESOURCE DELETION

HS-PDSCH FDD CODE
INFORMATION IE CONTAINS NO CODE — 1400

HS-SCCH FDD CODE
INFORMATION IE CONTAINS NO CODE — 1402

TRANSMIT PHYSICAL SHARED
CHANNEL RECONFIGURATION REQUEST — 1404

## FIG.14

HSDPA RESOURCE SWITCHING

DELETE HSDPA RESOURCES (CELL x) — 1500

ALLOCATE HSDPA RESOURCES (CELL x) — 1502

## FIG.15

HSDPA RESOURCE ALLOCATION

| DETERMINE HSDPA CELL | ~1610 |

| SET HS-PDSCH AND HS-SCCH TOTAL POWER | ~1612 |

| SET SCRAMBLING CODE FOR HS-PDSCH AND HS-SCCH | ~1614 |

| SET HS-PDSCH FDD CODE INFORMATION | ~1616 |

| SET HS-SCCH FDD CODE INFORMATION | ~1618 |

| TRANSMIT PHYSICAL SHARED CHANNEL RECONFIGURATION REQUEST | ~1620 |

FIG.16

HSDPA RESOURCE SWITCHING

| DELETE HSDPA RESOURCES (CELL x, HSDPA CELL y) | ~1710 |

| ALLOCATE HSDPA RESOURCES (CELL x, HSDPA CELL z) | ~1712 |

FIG.17